# EUROPEAN PATENT APPLICATION

(11) **EP 4 181 342 A1**
(43) Date of publication of application: **17.05.2023**
(21) Application number: 21850079.1
(22) Date of filing: 12.07.2021
(51) Int. Cl.: H02J 7/00

(54) **CHARGING APPARATUS, ELECTRONIC DEVICE, CHARGING SYSTEM, AND CHARGING METHOD**

(30) Priority: 27.07.2020 CN 202010733958
(71) Applicant: Huawei Technologies Co., Ltd., Shenzhen, Guangdong 518129 (CN)
(72) Inventor: YE, Gang, Shenzhen, Guangdong 518129 (CN); HOU, Qinghui, Shenzhen, Guangdong 518129 (CN); YANG, Chengjun, Shenzhen, Guangdong 518129 (CN)
(74) Representative: Pfenning, Meinig & Partner mbB
(86) International application number: PCT/CN2021/105825
(87) International publication number: WO 2022/022272

(57) **Abstract**

This application discloses a charging apparatus, an electronic device, a charging system, and a charging method. The charging apparatus is configured to charge the electronic device, and includes a first DCDC charger, a second DCDC charger, a first battery, and a charging terminal. The first DCDC charger is configured to charge the first battery after converting direct current power transmitted by an adapter, and is further configured to supply power to the second DCDC charger. An input end of the second DCDC charger is configured to receive a direct current voltage output by the first DCDC charger, an output end of the second DCDC charger is connected to the charging terminal, and the charging terminal is configured to connect to a receiving terminal of the electronic device. The second DCDC charger is configured to receive a charging parameter sent by the electronic device, where the charging parameter is obtained based on voltage information of a second battery of the electronic device. A corresponding charging voltage and a corresponding charging current are obtained based on the charging parameter, and the charging terminal is controlled to output the charging voltage and the charging current. The charging apparatus can reduce power consumption generated in the electronic device, and improve efficiency of charging the second battery.

## Description

This application claims priority to Chinese Patent Application No. 202010733958.7, filed with the China National Intellectual Property Administration on July 27, 2020 and entitled "CHARGING APPARATUS, ELECTRONIC DEVICE, CHARGING SYSTEM, AND CHARGING METHOD", which is incorporated herein by reference in its entirety.

### TECHNICAL FIELD

This application relates to the field of terminal device technologies, and in particular, to a charging apparatus, an electronic device, a charging system, and a charging method.

### BACKGROUND

With development of chip technologies, a true wireless stereo (True Wireless Stereo, TWS) technology is widely used in the field of Bluetooth headsets, for example, a TWS headset. Compared with a normal headset, left and right earbuds of the TWS headset can work independently without a cable connection.

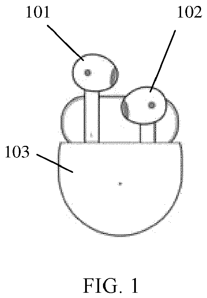

FIG. 1 is a schematic diagram of a TWS headset.

The TWS headset includes a left earbud 101, a right earbud 102, and a charging case 103. The charging case 103 is configured to charge the left earbud 101 and the right earbud 102. For example, when the left earbud 101 is located in the charging case 103, the charging case 103 transfers electric energy provided by a battery inside the charging case 103 to the left earbud 101, and a DCDC charger disposed inside the left earbud 101 charges a battery inside the left earbud 101 after converting the electric energy provided by the battery inside the charging case 103.

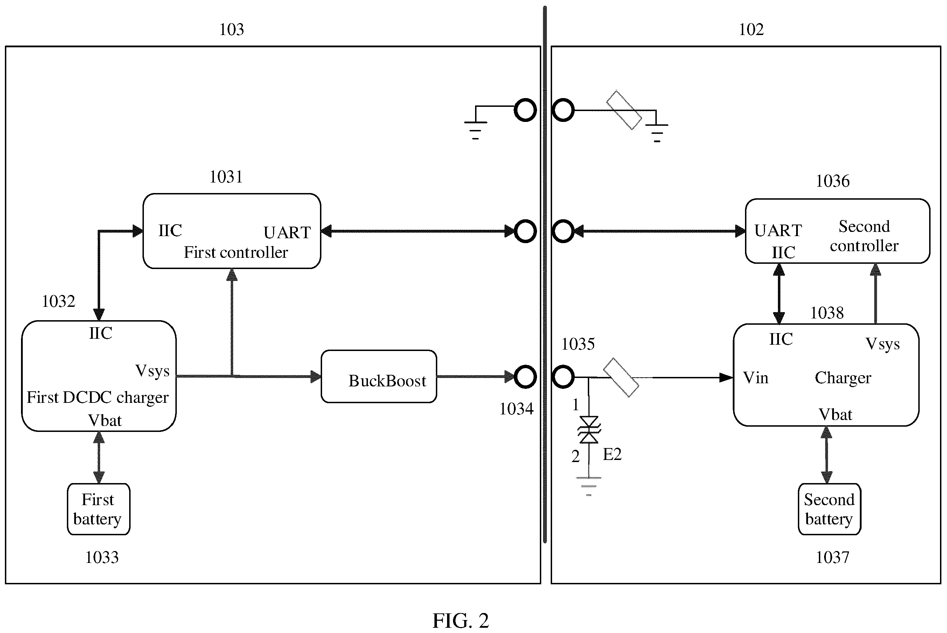

FIG. 2 is a schematic diagram of a charging system including a charging case and an earbud.

The charging system includes the charging case 103 and the earbud 102. It can be learned from the figure that a charger is disposed inside the earbud 102. The charger 1038 inside the earbud 102 converts electric energy based on power of a second battery 1037, and then charges the second battery 1037. The charger 1038 inside the earbud generates power consumption when converting the electric energy, and consequently charging efficiency of the second battery 1037 is reduced.

### SUMMARY

To resolve the foregoing technical problem, embodiments of this application provide a charging apparatus, an electronic device, a charging system, and a charging method, to reduce power consumption generated in a headset and improve efficiency of charging a battery in the headset.

According to a first aspect, this application provides a charging apparatus, including: a first DCDC charger, a second DCDC charger, a first battery, and a charging terminal. The first DCDC charger can charge the first battery after converting direct current power transmitted by an adapter, and further can directly charge the second DCDC charger. In a process in which the charging apparatus charges the electronic device, the second DCDC charger receives a charging parameter sent by the electronic device. The charging parameter may be obtained by a second controller inside the electronic device based on voltage information of a second battery, or may be obtained by a first controller inside the charging apparatus based on voltage information of a second battery. After obtaining the charging parameter, the second DCDC charger may obtain a corresponding charging voltage and a corresponding charging current based on the charging parameter. The second DCDC charger can further detect an output voltage and an output current of the charging terminal, compare the output voltage with the charging voltage, and gradually adjust the output voltage of the charging terminal, so that the output voltage of the charging terminal keeps consistent with the charging voltage. Similarly, the output current of the charging terminal is gradually adjusted, so that the output current of the charging terminal keeps consistent with the charging current. The second DCDC charger may output the charging voltage and the charging current to the electronic device by using the charging terminal and a receiving terminal. The electronic device directly charges the second battery by using the charging voltage and the charging voltage, without performing electric energy conversion again inside. This improves efficiency of charging the second battery. In the charging process, the charging parameter is obtained based on the voltage information of the second battery. When a voltage of the second battery changes, the charging parameter also changes. Therefore, the charging apparatus can directly output a corresponding charging voltage and a corresponding charging voltage based on the charging parameter, and the electronic device does not need to perform electric energy conversion. In other words, a level-1 DCDC charger is omitted, so that power consumption generated in the electronic device is reduced, and efficiency of charging the second battery is improved.

Preferably, the charging apparatus further includes a first controller. In different control policies, the first controller has different functions. For example, the first controller receives the charging parameter sent by the electronic device, and sends the charging parameter to the second DCDC charger. Because the charging parameter carries the charging voltage and the charging current that correspond to the second battery, the second DCDC charger can parse out the charging voltage and the charging current of the second battery based on the charging parameter. In this case, the charging parameter may be obtained by the second controller based on the voltage information of the second battery.

Preferably, the charging apparatus further includes a first controller. In another control policy, the first controller receives the voltage information of the second battery sent by the electronic device, obtains a corresponding charging parameter based on the voltage information of the second battery, and sends the charging parameter to the second DCDC charger. Because the charging parameter carries the charging voltage and the charging current that correspond to the second battery, the second DCDC charger can parse out the charging voltage and the charging current of the second battery based on the charging parameter. In this case, the charging parameter is obtained by the first controller based on the voltage information of the second battery.

Preferably, for example, when the electronic device is a headset and the charging apparatus is a charging case, the charging case needs to learn that the headset is in the charging base, and the headset also needs to learn that the headset is in the charging case by detecting whether the headset is located in the charging case, so as to ensure that the charging apparatus and the electronic device are in a connected state. When both the charging apparatus and the electronic device are in position, the electronic device sends a handshake signal to the charging apparatus. When receiving the handshake signal sent by the electronic device, the charging apparatus may determine that the electronic device is in position. Specifically, the second DCDC charger includes: a first state machine. When receiving the handshake signal sent by the electronic device, the first state machine determines that the electronic device is in position, and notifies the first controller that the electronic device is in position, so that it is unnecessary to detect whether the electronic device is in position again.

Preferably, the charging apparatus needs to confirm a handshake signal before charging the electronic device, so as to determine that the charging apparatus matches the electronic device. Specifically, the second DCDC charger includes a first state machine and a demodulation module. The demodulation module receives, from the charging terminal, a handshake signal sent by the electronic device, demodulates the handshake signal, and sends a demodulation result to the first state machine. After receiving the demodulation result, when determining, based on the demodulation result, that a handshake succeeds, the first state machine notifies the first controller that the handshake succeeds. When the handshake between the charging apparatus and the electronic device succeeds, the charging apparatus and the electronic device may enter a subsequent communication mode, and the first controller receives the voltage information or the charging parameter that is of the second battery and that is sent by the electronic device.

Preferably, that the first state machine notifies the first controller that the handshake succeeds is specifically: When confirming that the handshake succeeds, the first state machine sends an interrupt signal to the first controller. When detecting the interrupt signal, the first controller determines that the handshake succeeds, so as to prepare for subsequent communication and charging processes.

Preferably, in the charging process, the charging voltage and the charging current that are output by the charging apparatus to the electronic device need to be continuously adjusted based on the charging parameter of the second battery. Therefore, in a case of not additionally arranging a contact terminal between the charging apparatus and the electronic device, a first switch module and a DCDC conversion circuit are disposed in the second DCDC charger to complete conversion between the communication process and the charging process, and output, based on the charging parameter, the charging voltage and the charging current that are required by the second battery. Specifically, an input end of the DCDC conversion circuit is used as the input end of the second DCDC charger, an output end of the DCDC conversion circuit is connected to a first end of the first switch module, a second end of the first switch module is an output end of the second DCDC charger, and a third end of the first switch module is connected to a first communication interface of the first controller. When the first controller communicates with the electronic device, the first state machine controls the first switch module to connect the charging terminal to the first communication interface, so that the first controller can directly communicate with the second controller, to obtain the charging parameter of the second battery or the voltage information of the second battery. When charging the electronic device, the second DCDC charger controls the first switch module to connect the charging terminal to the output end of the DCDC conversion circuit, and controls, based on a voltage comparison result and a current comparison result, the DCDC conversion circuit to perform electric energy conversion.

Preferably, because an output voltage of the second DCDC charger is high, a voltage of a capacitor (not shown in the figure) connected in parallel to an output port of the second DCDC charger is high. Therefore, before the first switch module connects the charging terminal to the first communication interface, the first state machine disables output of the DCDC conversion circuit; and when a voltage of the charging terminal is lower than a first preset threshold, the first switch module is controlled to connect the charging terminal to the first communication interface, so as to reduce a possibility that the first controller is burnt.

Preferably, the charging apparatus further includes a carrier communication module. The first controller communicates with the electronic device by using the carrier communication module, and receives the voltage information of the second battery or the charging parameter of the second battery. When the charging apparatus communicates with the electronic device by using the carrier communication module, the electronic device can also send the voltage information of the second battery or the charging parameter of the second battery to the charging apparatus without turning off the charging process. This further improves efficiency of charging the second battery.

Preferably, the second DCDC charger includes: a first state machine and a demodulation module. When no first controller is disposed in the charging apparatus, the first state machine can implement a function implemented by the first controller. When a handshake is performed between the charging apparatus and the electronic device, the demodulation module receives, from the charging terminal, a handshake signal sent by the electronic device, demodulates the handshake signal, and sends a demodulation result to the first state machine. After confirming, based on the demodulation result, that the handshake succeeds, the first state machine receives the voltage information of the second battery or the charging parameter of the second battery sent by the electronic device. When receiving the voltage information of the second battery, the first state machine is further configured to obtain the charging parameter based on the voltage information of the second battery. When no first controller is disposed in the charging apparatus, a size of the charging apparatus can be reduced.

Preferably, the demodulation module demodulates a current signal at a second end of the second DCDC charger, and sends a demodulation result of the current signal to the first state machine. The first state machine compares the demodulation result of the current signal with a preset pulse signal, and determines, based on a comparison result, whether the handshake succeeds. For example, when the demodulation result is consistent with the preset pulse signal, it is confirmed that the handshake succeeds.

Preferably, the charging apparatus further includes a DCDC conversion circuit. An input end of the DCDC conversion circuit is the input end of the second DCDC charger, and an output end of the DCDC conversion circuit is connected to the charging terminal. The first state machine controls, based on a voltage comparison result and a current comparison result, the DCDC conversion circuit to perform electric energy conversion. The DCDC conversion circuit adjusts the output voltage and the output current based on the voltage comparison result and the current comparison result, to continuously adjust the output voltage of the DCDC conversion circuit to be consistent with the charging voltage, and the output current to be consistent with the charging current.

According to a second aspect, this application provides an electronic device, including a second battery, a second controller, a charging path, and a receiving terminal. The charging path is not a charger. The charging path has a simple impedance conversion function. A first end of the charging path is connected to the receiving terminal, a second end of the charging path is connected to the second battery, and the receiving terminal is configured to connect to a charging terminal of the charging apparatus. The second controller sends a charging parameter to the charging apparatus, so that the charging apparatus obtains the charging voltage and the charging current based on the charging parameter After obtaining the charging voltage and the charging current based on the charging parameter sent by the electronic device, the charging apparatus outputs the charging voltage and the charging current to the charging terminal, and the receiving terminal charges the second battery after receiving the output voltage and the output current of the charging terminal, where the output voltage is consistent with or has a multiple relationship with the charging voltage of the second battery, and the output current is consistent with the charging current of the second battery. When the output voltage is consistent with the charging voltage of the second battery, in a process in which the charging apparatus charges the electronic device, the second controller is configured to: when determining, based on the voltage of the second battery, that the charging phase is a constant-current charging phase or a constant-voltage charging phase, control the charging path to work in a bypass state to charge the second battery, where when the charging path works in the bypass state, an impedance of the charging path is the smallest, and the charging path is approximately equivalent to a conducting wire. When there is a multiple relationship between the output voltage and the charging voltage of the second battery, a switched-capacitor converter further needs to be additionally disposed in the charging path to perform voltage conversion, so as to implement voltage adjustment, and improves efficiency of charging the second battery. A closed-loop control is performed inside the charging apparatus, so that the output voltage is consistent with or has a multiple relationship with the charging voltage of the second battery, and the output current is consistent with the charging current of the second battery. The second battery can be charged by using the charging voltage and the charging current without a need to dispose a DCDC charger in the electronic device, so that power consumption generated in the electronic device is reduced and efficiency of charging the second battery is improved.

Preferably, the second controller is configured to send the voltage information of the second battery to the charging apparatus, so that the charging apparatus obtains a corresponding charging parameter based on the voltage information of the second battery. In other words, the second controller sends only the voltage information of the second battery to the charging apparatus, and the charging parameter is obtained by the first controller or a first state machine inside the charging apparatus.

Preferably, the charging path includes: a second switch module. A first end of the second switch module is used as the first end of the charging path, and a second end of the second switch module is used as the second end of the charging path. An impedance of the second switch module is adjustable. The second controller is configured to: obtain a corresponding charging phase based on the voltage information of the second battery; and when the charging phase is the constant-current charging phase or the constant-voltage charging phase, control the impedance of the second switch module to be the smallest, so that the impedance of the charging path is the smallest; and when the charging phase is a trickle charging phase, control the impedance of the second switch module to be the largest, so that the impedance of the charging path is the largest.

Preferably, the second switch module may be implemented by using two MOS transistors connected in series, for example, a first MOS transistor and a second MOS transistor. An anti-parallel diode of the first MOS transistor and an anti-parallel diode of the second MOS transistor have opposite directions. Further, the second controller can adjust the impedance of the charging path by adjusting an on/off state of the MOS transistor.

Preferably, the second switch module further includes a third MOS transistor. The third MOS transistor is connected in parallel to two ends of the two MOS transistors connected in series. When the charging phase is the constant-current charging phase, the second controller controls the third MOS transistor to be turned on, so that the first MOS transistor and the second MOS transistor that are connected in series are bypassed, to minimize the impedance of the charging path.

Preferably, the charging path further includes: a switched-capacitor converter; the switched-capacitor converter is connected in series to the second switch module; and the switched-capacitor converter is configured to boost a voltage input to the switched-capacitor converter and then output a boosted voltage, so that voltage adjustment can be implemented, a charging voltage for the second battery can be increased, and efficiency of charging the second battery can be improved.

Preferably, the charging path includes: a switched-capacitor converter, a safety switch, and a second switch module. A first end of the switched-capacitor converter is connected to the receiving terminal, a first end of the safety switch is connected to the first end of the switched-capacitor converter, and the first end of the switched-capacitor converter is connected to the second battery. A second end of the safety switch is connected to a first end of the second switch module, and a second end of the second switch module is connected to the second battery. An impedance of the second switch module is adjustable, so that control on an impedance of the charging path can be controlled in different charging phases. The second controller obtains a corresponding charging phase based on the voltage information of the second battery, and controls, in different charging phases, the switched-capacitor converter and the second switch module to work in different states. When the charging phase is the constant-current charging phase or the constant-voltage charging phase, control the safety switch to be turned off, and control the switched-capacitor converter to work in the bypass state; and when the charging phase is another charging phase, control the safety switch to be turned on. In addition to improving charging efficiency of the second battery in the constant-voltage charging phase and the constant-current charging phase, charging efficiency of the second battery in another charging phase can also be improved.

Preferably, the electronic device further includes a second state machine and a modulation module. The second state machine is configured to control the modulation module to modulate a handshake signal and send a modulated handshake signal to the receiving terminal, so that the charging apparatus receives the handshake signal to confirm whether a handshake succeeds. When it is determined that the handshake succeeds, the second state machine can determine that the electronic device matches the charging apparatus, and notify the second controller to communicate with the charging apparatus, so that the second controller sends the voltage information of the second battery or the charging parameter of the second battery to the charging apparatus, and the charging apparatus can provide, for the electronic device based on the voltage information or the charging parameter, the charging voltage and the charging current that are required by the second battery, to charge the second battery.

Preferably, the electronic device further includes a third switch module. A first end of the third switch module is connected to the receiving terminal, a second end of the third switch module is connected to the first end of the charging path, and a third end of the third switch module is connected to a second communication interface of the second controller. When the second controller communicates with the charging apparatus, the second state machine controls the third switch module to connect the receiving terminal to the second communication interface of the second controller, so that the second controller communicates with the first controller inside the charging apparatus. When the charging apparatus charges the second battery, the second state machine controls the third switch module to connect the receiving terminal to the first end of the charging path, so that the charging apparatus charges the electronic device.

Preferably, after the handshake signal is sent, the second state machine confirms that the handshake succeeds when detecting a voltage of the receiving terminal is lower than a second preset threshold.

Preferably, the electronic device further includes a carrier communication module. When the second controller communicates with the charging apparatus by using the carrier communication module, for example, sends the voltage information of the second battery or sends the charging parameter of the second battery to the charging apparatus, both communication and charging can be implemented without turning off a charging process in the communication process. In this case, time for charging the second battery is shortened and charging efficiency is further improved.

Preferably, the electronic device is any one of the following:
a Bluetooth headset, a band, and a watch.

According to a third aspect, this application provides a charging system, including any charging apparatus described in the first aspect and any electronic device described in the second aspect, where the charging apparatus is configured to charge the electronic device.

Preferably, there are two charging terminals of the charging apparatus, and there are two receiving terminals of the electronic device.

According to a fourth aspect, this application provides a charging method applying a charging apparatus. The charging apparatus includes: a first DCDC charger, a first battery, a second DCDC charger, and a charging terminal. The first DCDC charger is configured to charge the first battery after converting direct current power transmitted by an adapter, and is further configured to supply power to the second DCDC charger. An input end of the second DCDC charger is configured to receive a direct current voltage output by the first DCDC charger, an output end of the second DCDC charger is connected to the charging terminal of the electronic device, and the charging terminal is configured to connect to the receiving terminal of the electronic device. The method includes:
receiving a charging parameter sent by the electronic device, where the charging parameter is obtained based on voltage information of a second battery of the electronic device;
obtaining a corresponding charging voltage and a corresponding charging current based on the charging parameter;
detecting an output voltage and an output current of the charging terminal; and
controlling the charging terminal to output the charging voltage; and controlling the charging terminal to output the charging current.

According to a fifth aspect, this application provides a charging method, applied to an electronic device. The electronic device includes a second battery, a second controller, a charging path, and a receiving terminal. The receiving terminal is configured to connect to a charging terminal of a charging apparatus, a first end of the charging path is connected to the receiving terminal, and a second end of the charging path is connected to the second battery. The method includes:
receiving an output voltage and an output current of the charging terminal, where the output voltage is consistent with or has a preset multiple relationship with a charging voltage of the second battery, the output current is consistent with a charging current of the second battery, and both the output voltage and the output current are obtained by the charging apparatus based on a charging parameter sent by the electronic device; and
when it is determined, based on a voltage of the second battery, that a charging phase is a constant-current charging phase or a constant-voltage charging phase, controlling the charging path to work in a bypass state to charge the second battery.

Embodiments of this application have at least the following advantages.

An embodiment of this application provides a charging system. The charging system includes a charging apparatus and an electronic device. The charging apparatus is configured to charge the electronic device. To reduce power consumption generated in the electronic device in a charging process, the charging apparatus is improved internally, so that a second DCDC charger in the charging apparatus can directly charge a battery of the electronic device, to directly provide a charging voltage and a charging current that are required by the battery of the electronic device.

Specifically, the charging apparatus includes: a first battery, a first DCDC charger, a second DCDC charger, and a charging terminal. The electronic device includes a second battery, a second controller, a charging path, and a receiving terminal. An input end of the second DCDC charger is configured to connect to a direct current voltage output by the first DCDC charger, and an output end of the second DCDC charger is connected to the charging terminal. The second DCDC charger obtains a corresponding charging voltage and a corresponding charging current based on a charging parameter, detects an output voltage and an output current of the charging terminal, compares the output voltage with the charging voltage and controls, based on a voltage comparison result, the output voltage of the charging terminal to be consistent with the charging voltage, and compares the output current with the charging current and controls, based on a current comparison result, the output current to be consistent with the charging current. When the charging apparatus is connected to the electronic device, the charging terminal and the receiving terminal are also in a connected state. Therefore, the second DCDC charger may output the charging voltage and the charging current to the electronic device by using the charging terminal and the receiving terminal. The electronic device directly charges the second battery by using the charging voltage and the charging current, without performing electric energy conversion again inside. Therefore, efficiency of charging the second battery can be improved.

Because the charging parameter is obtained based on voltage information of the second battery, that is, when a voltage of the second battery changes, the charging parameter changes accordingly, and the charging apparatus may output a corresponding charging voltage and a corresponding charging current based on the charging parameter to charge the electronic device, in other words, the electronic device does not need to perform electric energy conversion. A level-1 DCDC charger is omitted in the electronic device, so that power consumption generated in the electronic device is reduced, and efficiency of charging the second battery is improved.

### BRIEF DESCRIPTION OF DRAWINGS

FIG. 1 is a schematic diagram of a TWS headset;
FIG. 2 is a schematic diagram of a charging system including a charging case and an earbud;
FIG. 3 is a schematic diagram of a charging apparatus and an electronic device according to an embodiment of this application;
FIG. 4 is a schematic diagram of another charging apparatus and electronic device according to an embodiment of this application;
FIG. 5 is a schematic diagram of charging a charging case according to an embodiment of this application;
FIG. 6 is a schematic diagram of a charging system according to an embodiment of this application;
FIG. 7 is a schematic diagram of still another charging system according to an embodiment of this application;
FIG. 8 is a schematic diagram of a charging system in a preparation phase according to an embodiment of this application;
FIG. 9 is a schematic diagram of an initial state of a charging system according to an embodiment of this application;
FIG. 10 is a work flowchart of a preparation phase of a charging system according to an embodiment of this application;
FIG. 11 is a schematic diagram of still another charging system in a preparation phase according to an embodiment of this application;
FIG. 12 is a schematic diagram of pre-charging an electronic device according to an embodiment of this application;
FIG. 13A and FIG. 13B are a schematic diagram of modulating a handshake signal according to an embodiment of this application;
FIG. 14A and FIG. 14B are a schematic diagram of demodulating a handshake signal according to an embodiment of this application;
FIG. 15 is a schematic diagram of a charging system after a handshake succeeds according to an embodiment of this application;
FIG. 16A is a schematic diagram of a charging system in a communication state according to an embodiment of this application;
FIG. 16B-1, FIG. 16B-2 and FIG. 16B-3 are a work flowchart of a charging apparatus and an electronic device according to an embodiment of this application;

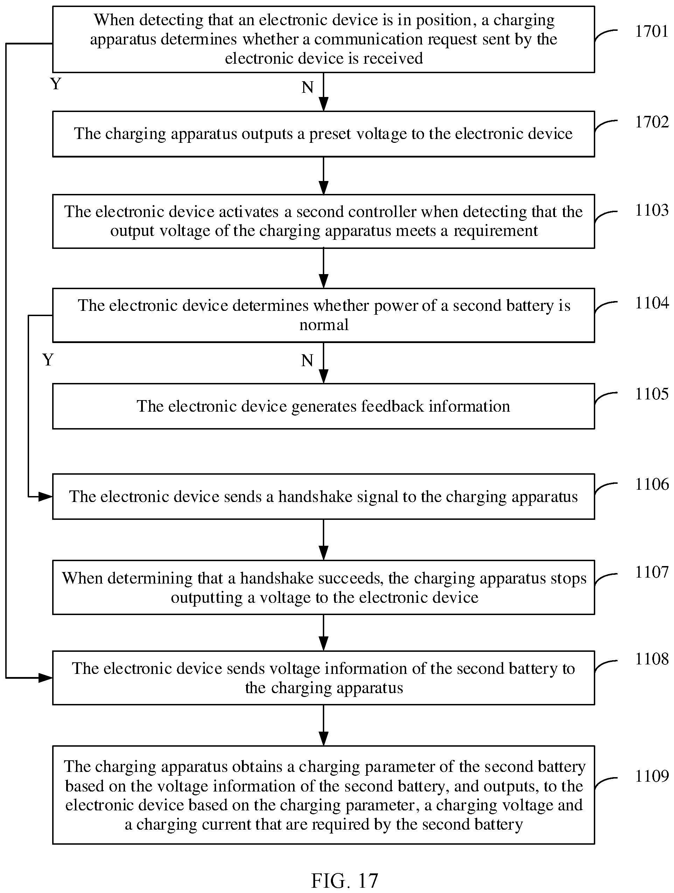

FIG. 17 is a work flowchart of a preparation phase of still another charging system according to an embodiment of this application;

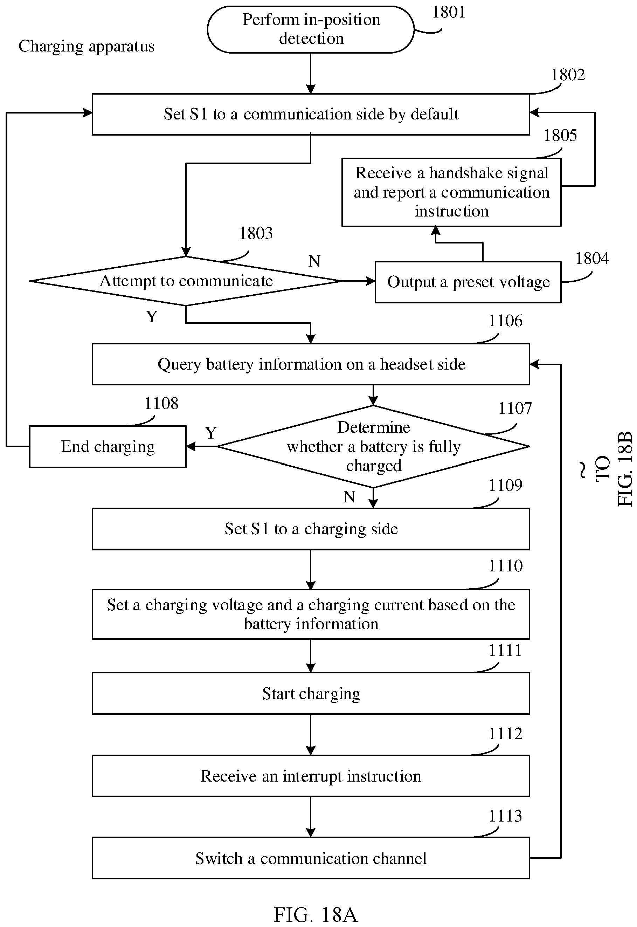

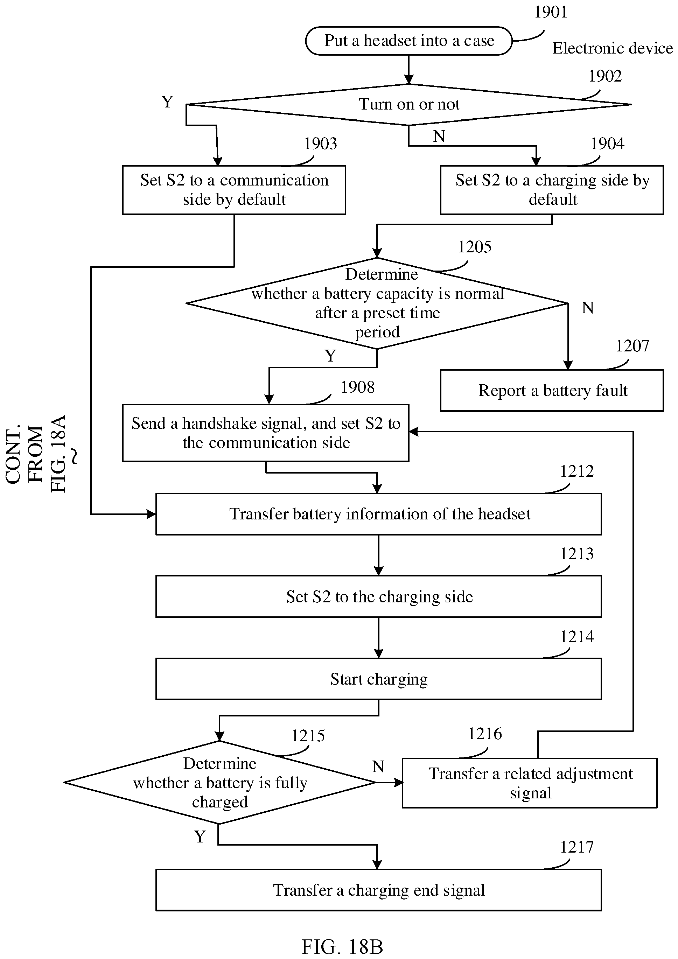

FIG. 18A and FIG. 18B are a work flowchart of still another charging apparatus and electronic device according to an embodiment of this application;

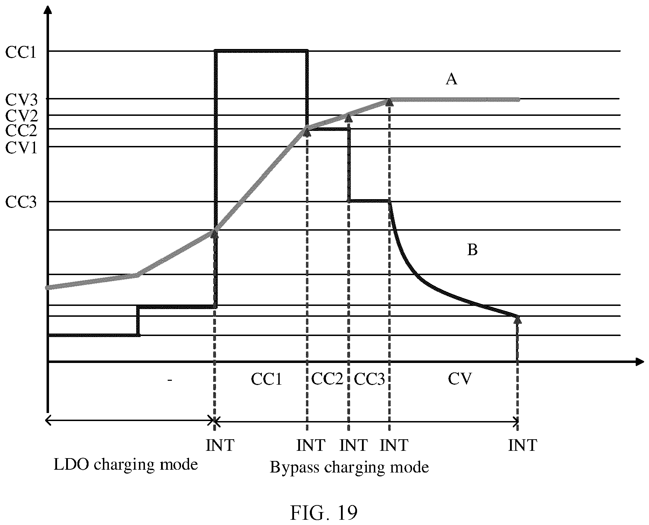

FIG. 19 is a schematic diagram of a charging phase of a charging system according to an embodiment of this application;

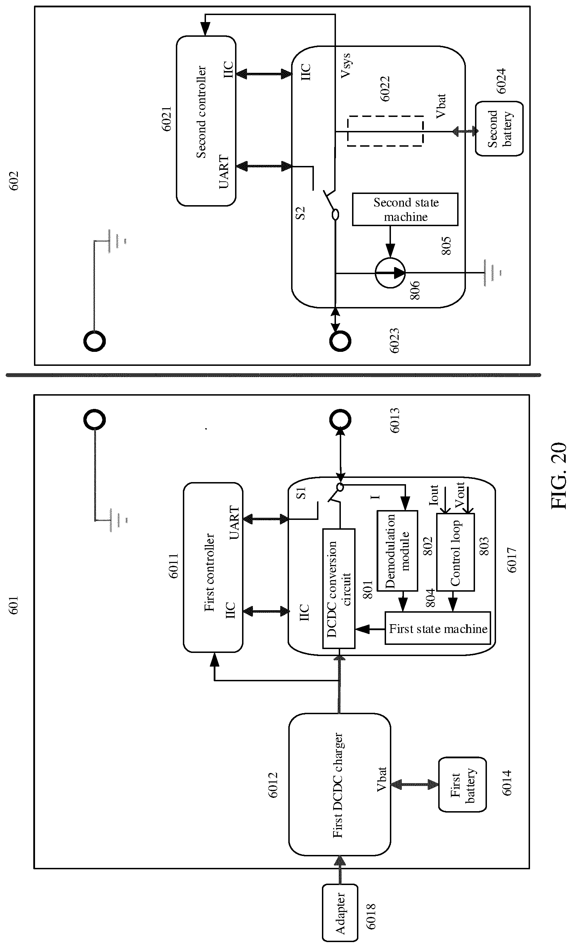

FIG. 20 is a schematic diagram of a charging path according to an embodiment of this application;

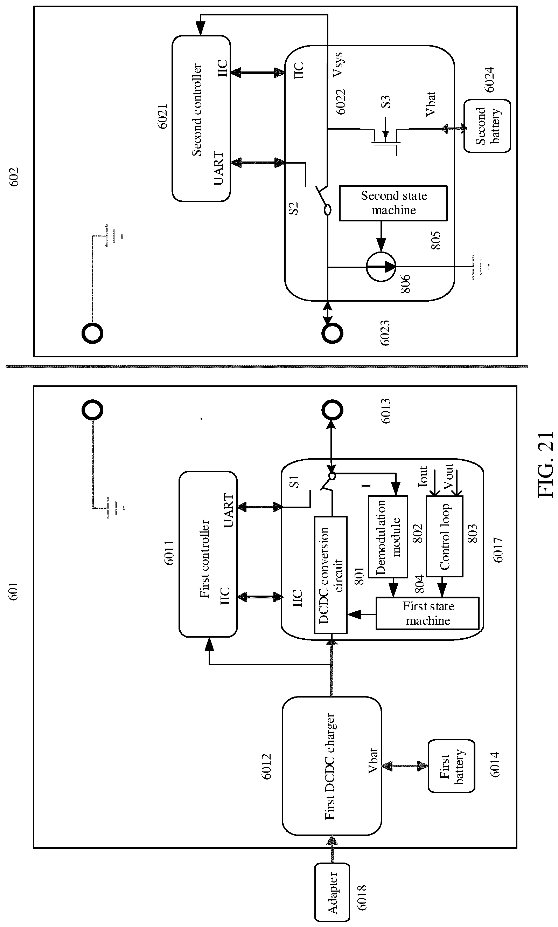

FIG. 21 is a schematic diagram of still another charging path according to an embodiment of application;

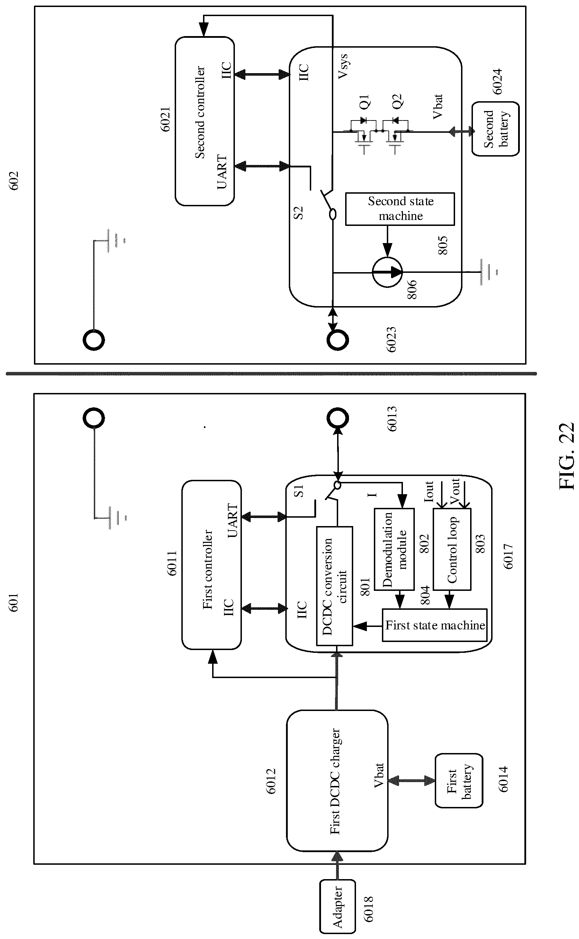

FIG. 22 is a schematic diagram of a second switch module according to an embodiment of this application;

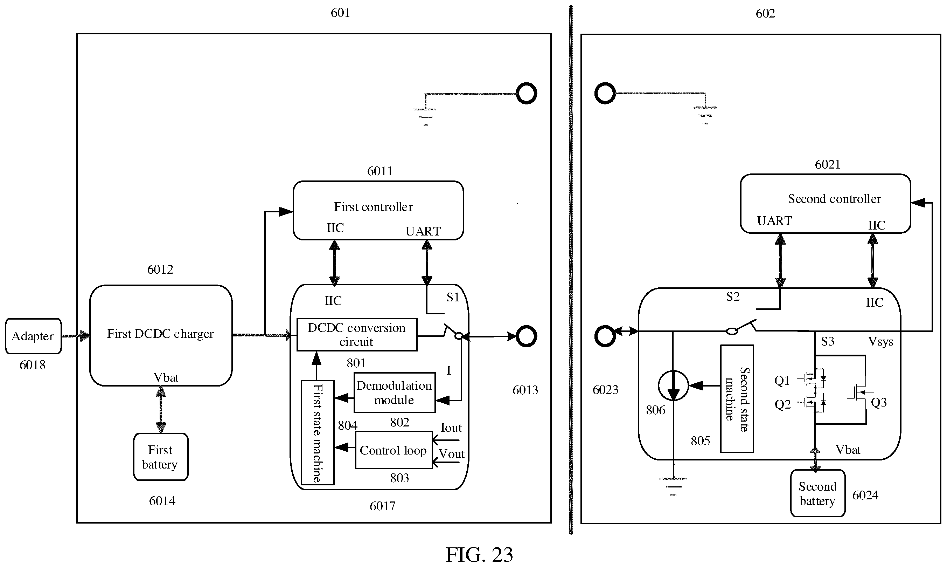

FIG. 23 is a schematic diagram of still another second switch module according to an embodiment of this application;

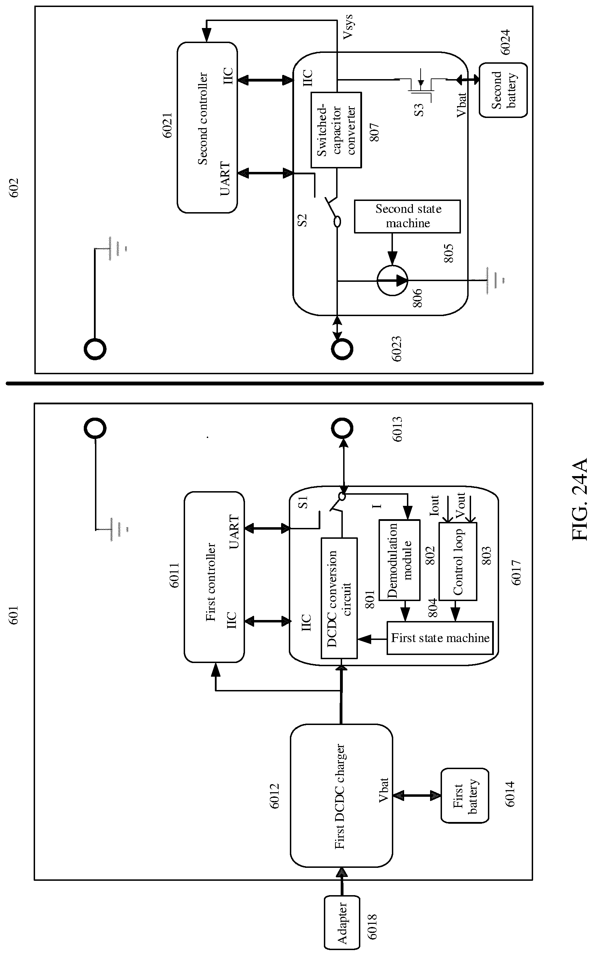

FIG. 24A is a schematic diagram of still another charging path according to an embodiment of this application;

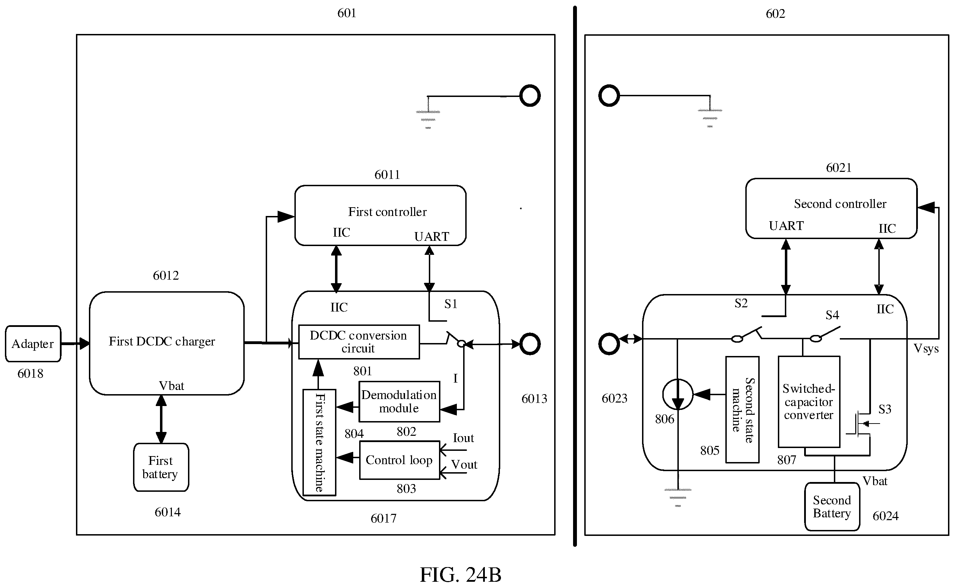

FIG. 24B is a schematic diagram of yet another charging path according to an embodiment of this application;

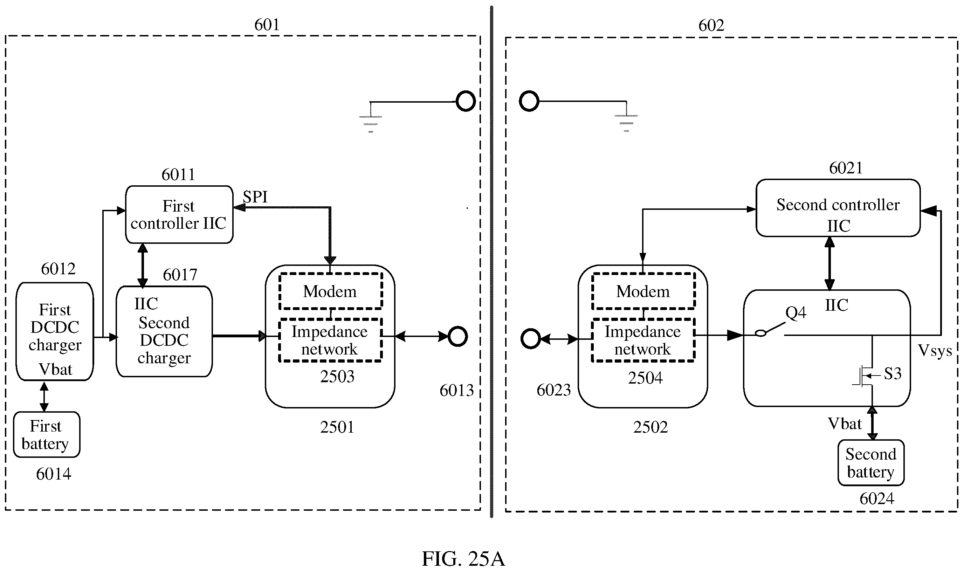

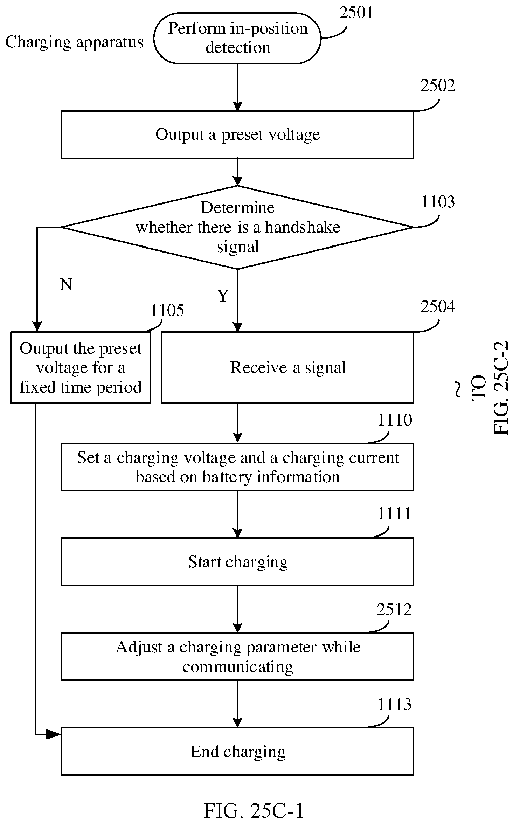

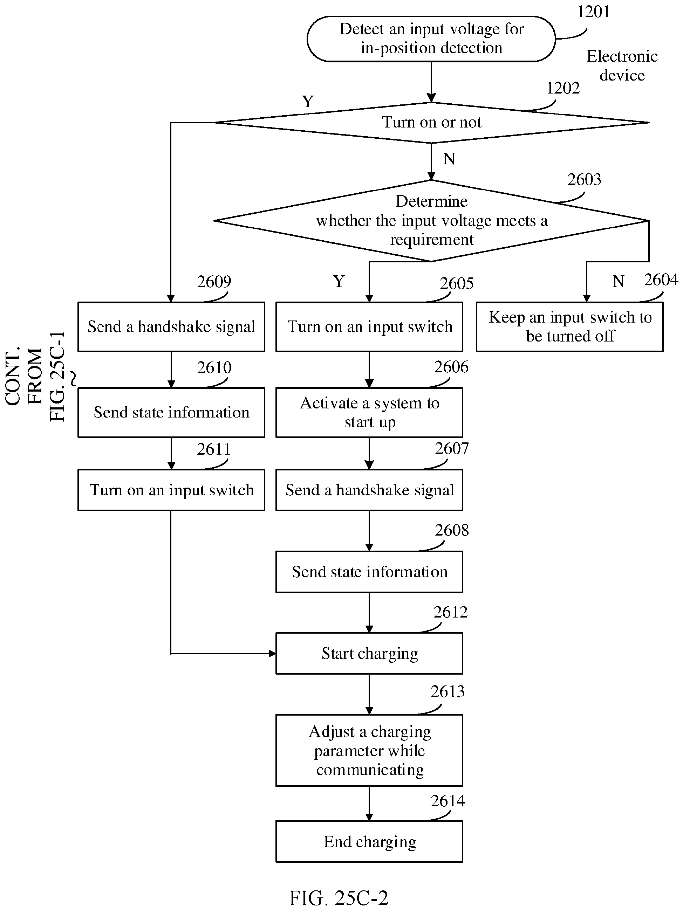

FIG. 25A is a schematic diagram of another charging system according to an embodiment of this application;

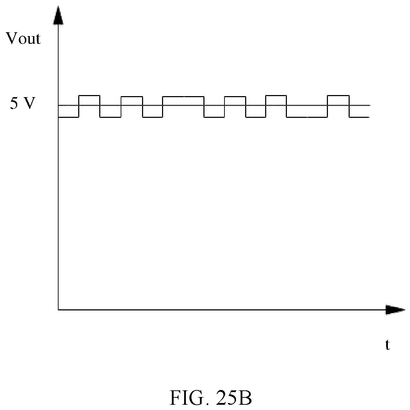

FIG. 25B is a waveform diagram of a pulse signal according to an embodiment of this application;
FIG. 25C-1 and FIG. 25C-2 are a work flowchart of yet another charging apparatus and electronic device according to an embodiment of this application;

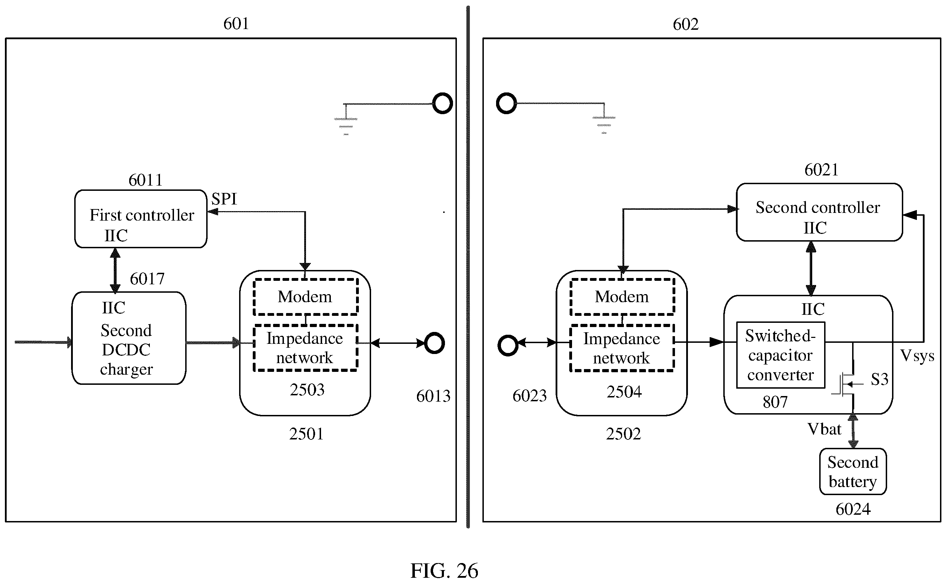

FIG. 26 is a schematic diagram of yet another charging system according to an embodiment of this application;

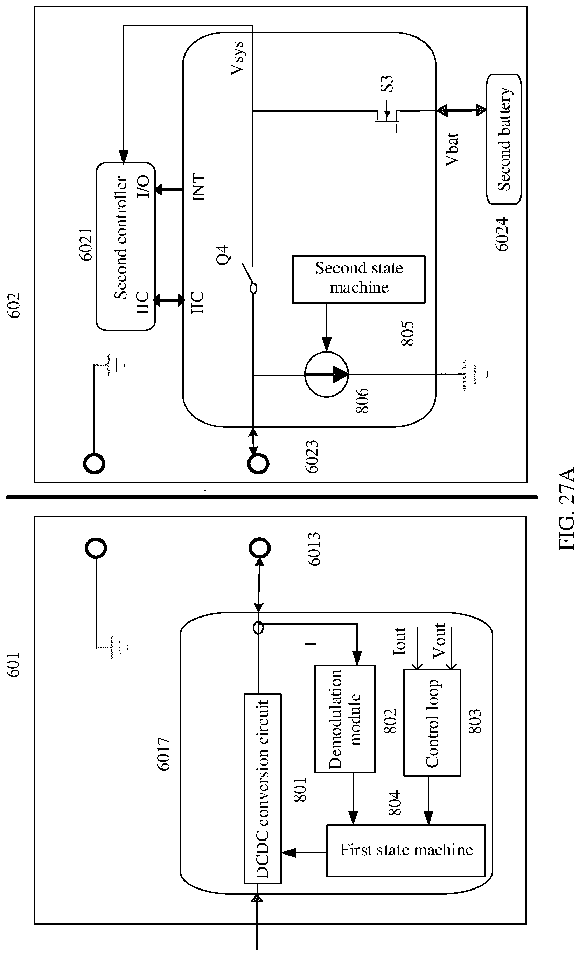

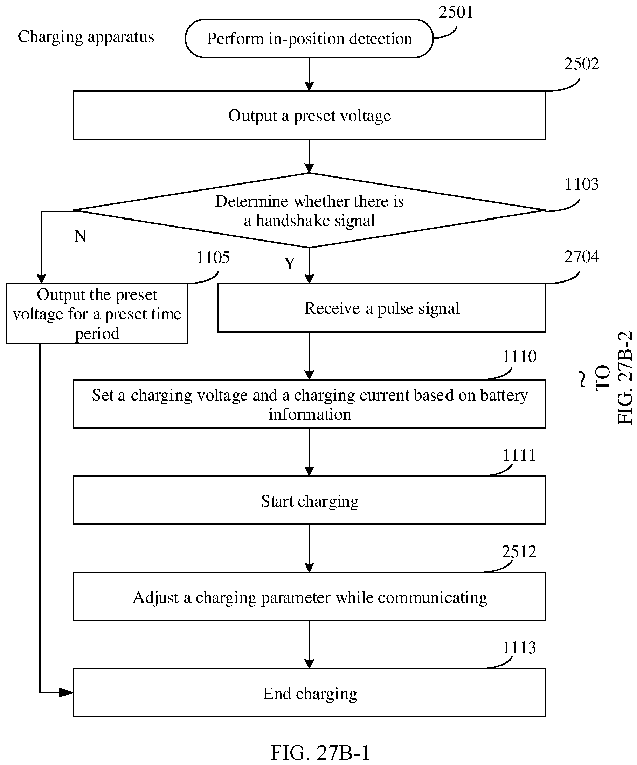

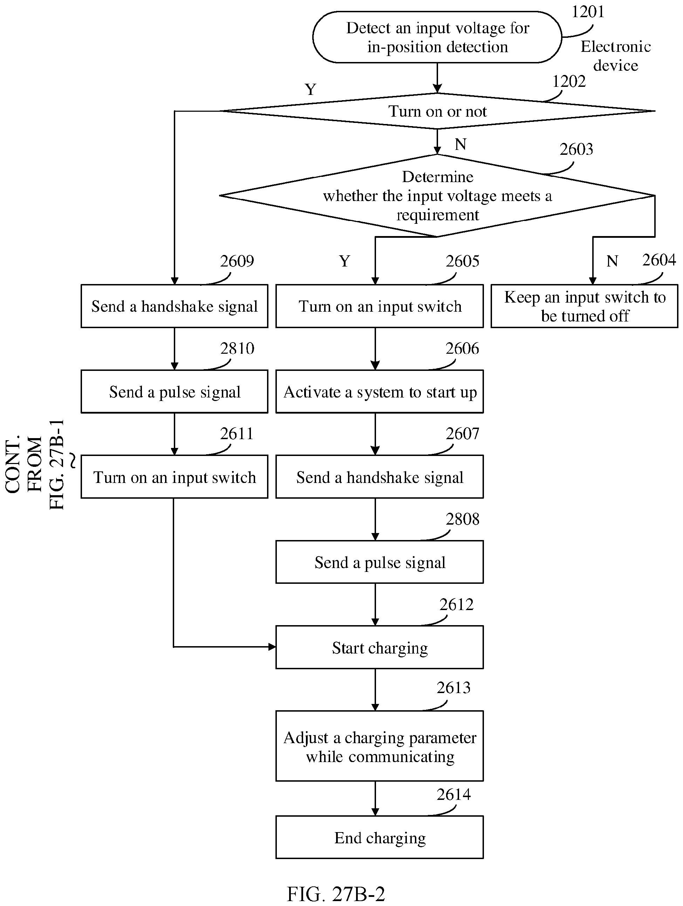

FIG. 27A is a schematic diagram of still another charging system according to an embodiment of this application;
FIG. 27B-1 and FIG. 27B-2 are a work flowchart of another charging apparatus and electronic device according to an embodiment of this application;

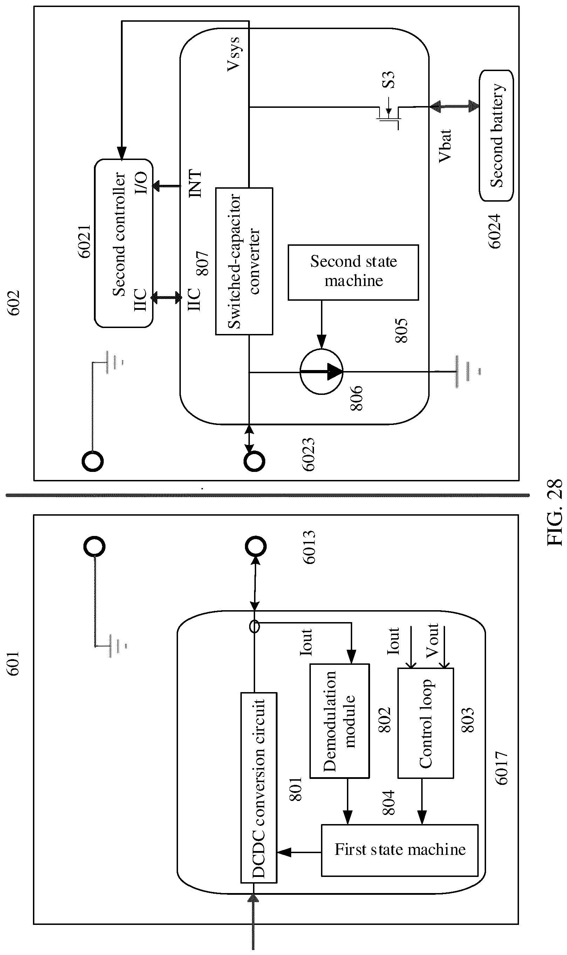

FIG. 28 is a schematic diagram of another charging system according to an embodiment of this application;

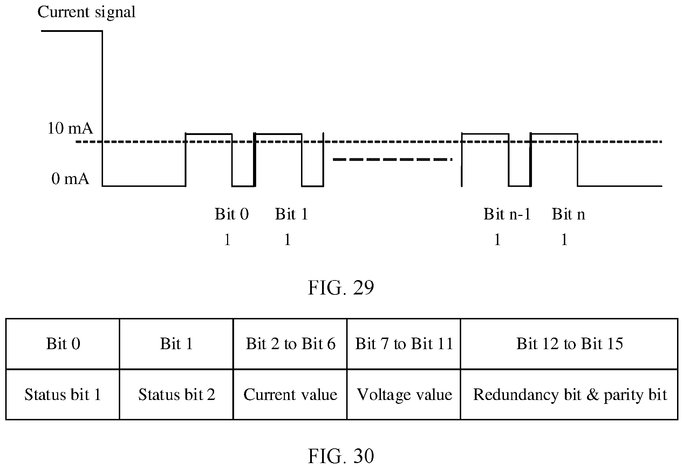

FIG. 29 is a waveform diagram of a pulse signal according to an embodiment of this application; and
FIG. 30 is a schematic diagram of a quantity of bits in a feature character string according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The following terms "first", "second", and the like are merely intended for a purpose of description, and shall not be understood as an indication or implication of relative importance or implicit indication of a quantity of indicated technical characteristics. Therefore, a feature limited by "first" or "second" may explicitly or implicitly include one or more features. In the descriptions of this application, unless otherwise stated, "a plurality of" means two or more than two.

In addition, in this application, orientation terms such as "up" and "down" may include but are not limited to orientations of schematically placed components in relative accompanying drawings. It should be understood that these orientation terms may be relative concepts. The orientation terms are used for relative description and clarification, and may vary correspondingly based on a change in an orientation in which the component is placed in the accompanying drawings.

In this application, it should be noted that the term "connection" should be understood in a broad sense unless otherwise expressly specified and limited. For example, the "connection" may be a fixed connection, may be a detachable connection, may be an integral connection; and may be a direct connection, or may be an indirect connection implemented by using a medium. In addition, a term "coupling" may be a manner of implementing an electrical connection for signal transmission. The "coupling" may be a direct electrical connection, or may be an indirect electrical connection by using an intermediate medium.

A type of the charging apparatus is not specifically limited in this embodiment of this application. The charging apparatus may be a charging cradle, or may be a charging case.

A type of the electronic device is not specifically limited in this embodiment of this application. The electronic device may be a headset, a smartwatch, a smart band, or the like.

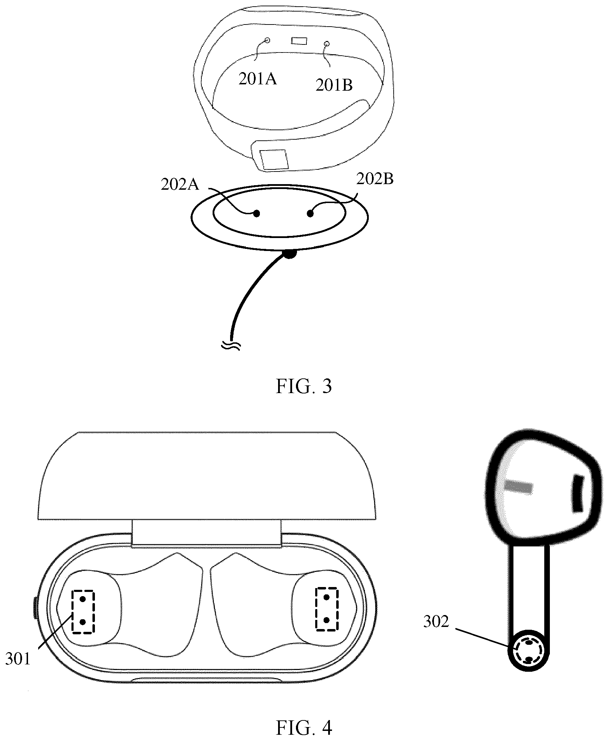

FIG. 3 is a schematic diagram of a charging apparatus and an electronic device according to an embodiment of this application.

When the charging apparatus is a charging cradle, for example, the electronic device may be a smart band. As shown in the figure, the charging cradle includes a first charging terminal 202A and a second charging terminal 202B, and the smart band includes a first receiving terminal 201A and a second receiving terminal 201B. In this embodiment, a quantity of charging terminals is not specifically limited, and a quantity of receiving terminals is not specifically limited. Generally, a quantity of charging terminals is equal to a quantity of receiving terminals, for example, 2, or 3. In this embodiment, only an example in which there are two charging terminals and two receiving terminals is used for description. In addition, the charging apparatus and the electronic device may further be wirelessly charged.

Types of the charging terminal and the receiving terminal are not limited in this application. For example, the charging terminal may be a USB interface, a pogopin, a metal elastomer, or made of another conductive material. Certainly, the receiving terminal may alternatively be a USB interface, a pogopin, a metal elastomer, or made of another conductive material.

When the smart band needs to be charged, the smart band is placed on the charging cradle, so that the first charging terminal 202A is connected to the first receiving terminal 201A, and the second charging terminal 202B is connected to the second receiving terminal 201B. Further, the charging cradle may transfer electric energy to the smart band to charge the smart band.

FIG. 4 is a schematic diagram of another charging apparatus and electronic device according to an embodiment of this application.

When the charging apparatus is a charging case, the electronic device may be a headset, and the headset includes a left earbud and a right earbud. When the headset needs to be charged, after the headset is placed in the charging case, a charging terminal 301 of the charging case is connected to a receiving terminal 302 of the headset, and then the charging case may transfer electric energy to the headset to charge the headset.

For ease of description, the following describes a working principle of charging the electronic device by the charging apparatus by using an example in which the charging apparatus is a charging case and an example in which the electronic device is a headset.

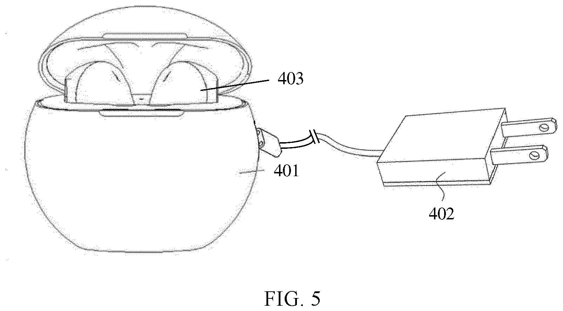

FIG. 5 is a schematic diagram of charging a charging case according to an embodiment of this application.

A charging interface (not shown in the figure) is disposed on a charging case 401. The charging case 401 may be connected to an adapter 402 by using the charging interface. After the adapter 402 is connected to a power supply, the charging case 401 may be charged, so that a battery in the charging case has a specific amount of power. Therefore, when the charging case 401 is disconnected from the adapter 402, the charging case 401 may transfer, to an earbud 403, electric energy provided by the battery in the charging case.

In addition, the charging case 401 may be further wirelessly charged in a wireless charging manner, so that the adapter 402 does not need to be directly connected to the charging case 401. The adapter 402 may be connected to a wireless charging device (for example, a wireless charging cradle) that matches the charging case 401, and wirelessly charges the charging case 401 by using the wireless charging device.

With reference to FIG. 2, in a process in which the charging case 103 charges an earbud 103, the first controller 1031 controls the first DCDC charger 1032 to convert electric energy provided by a first battery 1033, and then provides the converted electric energy to the earbud 102 by using a first charging terminal 1034. After the earbud 102 receives the electric energy by using a first receiving terminal 1035, the second controller 1036 controls a charger 1038 to convert the received electric energy and charge a second battery 1037.

However, after the charger 1038 is disposed in the earbud 102, when charging the earbud 102, the charger 1038 in the earbud 102 needs to convert electric energy provided by the charging case 103 and then provide the converted electric energy to the second battery 1037. In a process in which the charger 1038 performs electric energy conversion, power consumption is generated in a circuit. Consequently, the earbud 102 heats up, and charging efficiency of the second battery is reduced.

To resolve the foregoing technical problem, embodiments of this application provide a charging apparatus, an electronic device, a charging system, and a charging method. For ease of understanding, implementations of the charging apparatus and the electronic device are integrated into the charging system for description below, and the charging apparatus and the electronic device are not separately described. The charging system includes a charging apparatus and an electronic device. In a process in which the charging apparatus charges the electronic device, the charging apparatus may directly output, to the electronic device based on a charging parameter, a charging voltage and a charging current that correspond to the charging parameter The charging parameter is obtained based on voltage information of the second battery, is related to a voltage of the second battery, and changes with a change of the voltage of the second battery. The electronic device no longer includes a DCDC charger. Therefore, in the charging system provided in embodiments of this application, because a level-1 charger is not provided in the electronic device for electric energy conversion, power consumption generated in the electronic device is reduced, and charging efficiency of the second battery is improved.

To make a person skilled in the art better understand the technical solutions provided in embodiments of this application, the following describes the technical solutions provided in embodiments of this application with reference to the accompanying drawings.

For ease of understanding by a person skilled in the art, the following directly describes a system embodiment, that is, the system includes a charging apparatus and an electronic device. Specific implementations and working principles of the charging apparatus and the electronic device are combined for description.

### System Embodiment 1

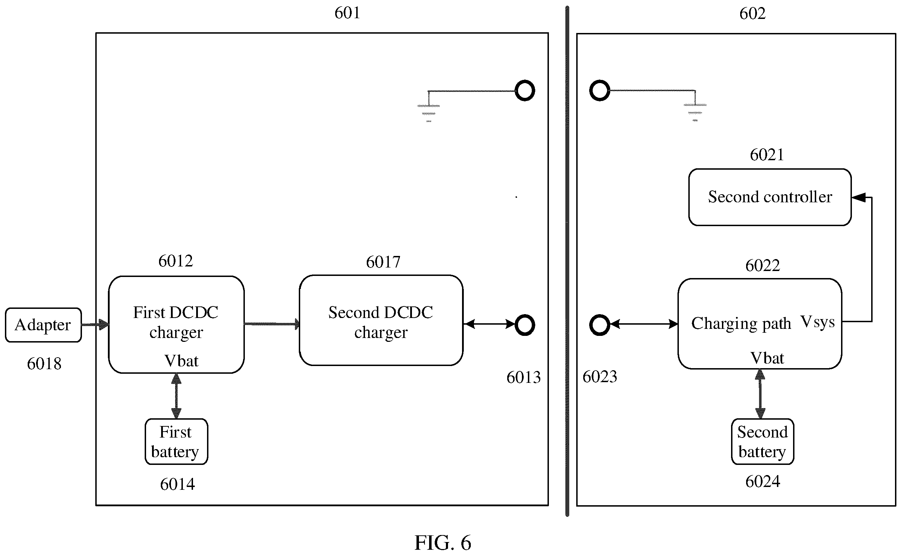

FIG. 6 is a schematic diagram of a charging system according to an embodiment of this application.

The charging system includes a charging apparatus 601 and an electronic device 602.

The charging apparatus 601 is configured to charge the electronic device 602.

The charging apparatus 601 includes: a first DCDC charger 6012, a charging terminal 6013, a first battery 6014, and a second DCDC charger 6017.

The first DCDC charger 6012 is configured to charge the first battery 6014 after converting direct current power transmitted by an adapter, and is further configured to supply power to the second DCDC charger 6017.

An input end of the second DCDC charger 6017 is configured to receive a direct current voltage output by the first DCDC charger 6012, an output end of the second DCDC charger 6017 is connected to a charging terminal, and the charging terminal is configured to connect to a receiving terminal of the electronic device.

The second DCDC charger 6017 is configured to: receive a charging parameter sent by the electronic device, where the charging parameter is obtained based on voltage information of a second battery of the electronic device; obtain a corresponding charging voltage and a corresponding charging current based on the charging parameter, and control the charging terminal to output the charging voltage; and control the charging terminal to output the charging current.

The charging parameter may include one or more of a current voltage, a battery temperature, a state of charge SOC, a quantity of cycles (battery life), and path impedance voltage drop information of the second battery. The charging apparatus may obtain, mainly by using the charging parameter, a charging voltage and a charging current that are required by the second battery.

Specifically, an output voltage and an output current of the charging terminal may be detected, the output voltage is compared with the charging voltage, and the output voltage of the charging terminal is controlled, based on a voltage comparison result, to be consistent with the charging voltage; and the output current is compared with the charging current, and the output current is controlled, based on a current comparison result, to be consistent with the charging current.

That is, the second DCDC charger 6017 has both current loop control and voltage loop control, and may control the output voltage and the output current in a closed-loop manner based on the charging parameter, so that the output voltage and the output current meet a charging requirement of the second battery.

The electronic device 602 includes a second controller 6021, a charging path 6022, a receiving terminal 6023, and a second battery 6024.

The receiving terminal 6023 is configured to connect to the charging terminal of the charging apparatus. The receiving terminal is configured to receive the output voltage and the output current of the charging terminal. The output voltage is consistent with a charging voltage of the second battery, and the output current is consistent with a charging current of the second battery. Both the output voltage and the output current are obtained by the charging apparatus based on the charging parameter sent by the electronic device.

A first end of the charging path 6022 is connected to the receiving terminal, and a second end of the charging path 6022 is connected to the second battery.

The second controller 6017 is configured to: when it is determined, based on a voltage of the second battery, that a charging phase is a constant-current charging phase or a constant-voltage charging phase, control the charging path to work in a bypass state to charge the second battery.

The charging path 6022 has a simple impedance conversion function.

When power of the charging apparatus 601 is insufficient, that is, the power of the first battery 6014 is insufficient, an input end of the first DCDC charger 6012 is configured to connect to an adapter 6018, and a first end of the first DCDC charger 6012 is configured to connect to the first battery 6014, so as to charge the first battery 6014 by using the adapter 6018. The first DCDC charger 6012 may convert electric energy provided by the adapter 6018 and then provide the converted electric energy to the first battery 6014, to charge the first battery 6014.

In addition, the first battery 6014 may alternatively be charged in another wireless charging manner, to ensure sufficient power of the charging apparatus 601. When the charging apparatus 601 charges the electronic device 602, a first end of the first DCDC charger 6012 is configured to connect to the first battery 6014, and a second end of the first DCDC charger 6012 is configured to connect to the input end of the first DCDC charger 6017, so that a direct current output by the first DCDC charger 6012 after converting electric energy of the first battery 6014 is supplied to the input end of the second DCDC charger 6017. The output end of the second DCDC charger is connected to the charging terminal 6013, and the charging terminal 6013 is configured to connect to the receiving terminal 6023 of the electronic device 602. The receiving terminal 6023 is configured to connect to the first end of the charging path 6022, and the second end of the charging path 6022 is connected to the second battery 6024. The second DCDC charger 6017 is configured to convert electric energy based on a charging parameter of the second battery 6024 of the electronic device 602, so that the charging terminal 6013 outputs a charging voltage and a charging current that correspond to the charging parameter, where the charging parameter is obtained based on voltage information of the second battery 6024, and the charging parameter carries the charging voltage and the charging current.

In a process in which the charging apparatus 601 charges the electronic device 602, the charging terminal 6013 of the charging apparatus 601 is connected to the receiving terminal 6023 of the electronic device 602. Therefore, after the second DCDC charger 6017 sends the charging voltage and the charging current that are required by the second battery 6024 to the charging terminal 6013, the receiving terminal 6023 is configured to receive the charging voltage and the charging current that are required by the second battery 6024 and that are sent by the charging terminal 6013.

Because the first end of the charging path 6022 is connected to the receiving terminal 6023, the second end of the charging path 6022 is connected to the second battery 6024. After receiving the charging voltage and the charging current that are sent by the charging terminal 6013, the receiving terminal 6023 may directly charge the second battery 6024.

In a process of charging the second battery 6024, the second controller 6021 is configured to: when determining, based on a voltage of the second battery 6024, that the charging phase is a constant-current charging phase or a constant-voltage charging phase, control the charging path 6022 to work in a bypass state. When the charging path 6022 works in the bypass state, the bypass state means that an impedance of the charging path 6022 is minimized, so that the receiving terminal 6023 is directly connected to the second battery 6024 to directly charge the second battery 6024. For example, when the charging path includes a switching transistor, the bypass state corresponds to a maximum opening of the switching transistor, that is, an all-open state. When the charging path works in the bypass state, the bypass state corresponds to a bypass charging mode.

It should be noted that the output voltage transmitted by the charging terminal to the receiving terminal is consistent with the charging voltage of the second battery. Consistency does not mean that the output voltage is the same as the charging voltage of the second battery. In other words, the output voltage corresponds to the charging voltage of the second battery, but is not the same as the charging voltage. A voltage drop occurs because there is a loss on the charging path. Generally, if the voltage drop is less than 150 mv, it is considered that the output voltage transmitted to the receiving terminal is consistent with the charging voltage of the second battery. The specification explains that because impedance exists on the path, a voltage drop is inevitable. Generally, the voltage drop may be less than 150 mv. A multiple may be 2:1, 3:1, 4:1, or the like, and a specific value depends on a switched-capacitor converter.

Vsys in FIG. 6 represents a port that is in the headset and that supplies power to the second controller 6021 by using the second battery 6024. Vsys in the following figures has a same meaning, and details are not described again.

Vbat in the charging apparatus 601 shown in FIG. 6 represents a port through which the first DCDC charger is connected to the first battery; and Vbat in the electronic device 602 represents a port through which the second battery is connected to the charging path. A meaning of Vbat in the following charging apparatus is the same as that of Vbat in an electronic device terminal, and details are not described again.

Vsys in FIG. 6 represents a port that is in the headset and that supplies power to the second controller 6021 by using the second battery 6024. Vsys in the following figures has a same meaning, and details are not described again. Similarly, Vbat on the charging apparatus side in FIG. 6 represents a port through which the first DCDC charger 6012 is connected to the first battery 6014, and Vbat on the headset side represents a port through which the charging path is connected to the second battery. Vbat in the following figures has a same meaning, and details are not described again.

Compared with the charging system shown in FIG. 2, in the charging system provided in FIG. 6 in this embodiment of this application, in a process in which the charging apparatus of the charging system charges the electronic device, the charging apparatus can obtain the charging voltage and the charging current based on the charging parameter of the second battery in the electronic device. Further, the second DCDC charger of the charging apparatus may convert electric energy based on the charging parameter, and output the charging voltage and the charging current that correspond to the charging parameter, to charge the second battery. Because the electronic device does not need to convert electric energy again, a level-1 charger is saved, and power consumption caused by electric energy conversion performed by the charger is reduced. Therefore, according to the charging system provided in this embodiment of this application, power consumption generated in the electronic device can be reduced, and charging efficiency of the second battery can be improved.

The foregoing embodiments describe a working principle of the charging system. The following describes a working procedure of the charging system in detail.

### System Embodiment 2

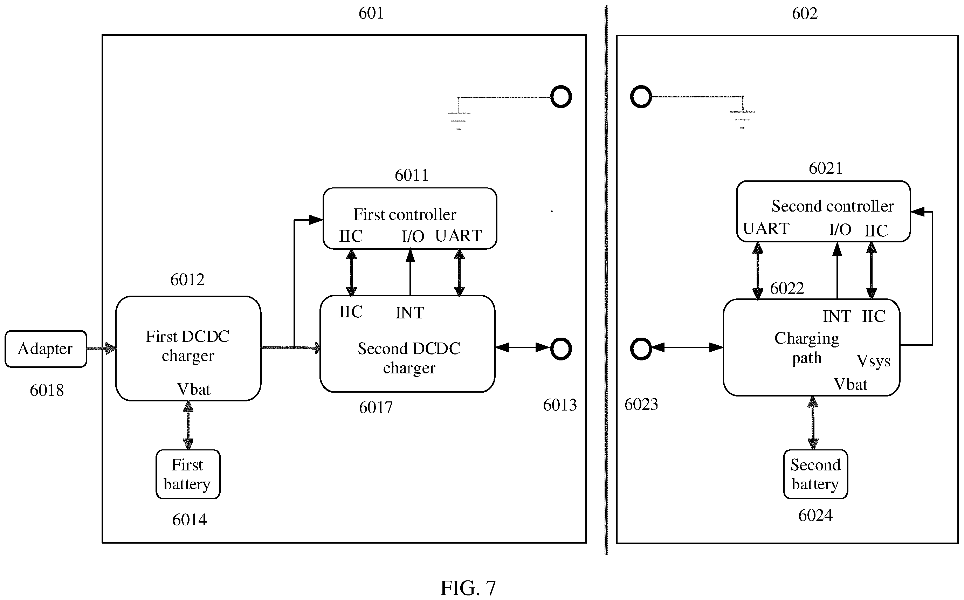

FIG. 7 is a schematic diagram of still another charging system according to an embodiment of this application.

The charging apparatus 601 in the charging system further includes a first controller 6011.

In different control policies, the first controller 6011 has different functions. The following describes two policies.

Policy 1: A charging parameter of the second battery 6024 is obtained by the second controller 6021.

The first controller 6011 is configured to: receive the charging parameter sent by the second controller 6021 of the electronic device, and send the charging parameter to the second DCDC charger, where the charging parameter carries a charging voltage and a charging current that correspond to the second battery.

Specifically, after detecting voltage information of the second battery 6024, the second controller 6021 may obtain the charging parameter of the second battery 6024 based on the voltage information of the second battery 6024, and send the charging parameter to the first controller 6011.

The first controller 6011 is configured to: receive the charging parameter sent by the electronic device 602, and send the charging parameter to the second DCDC charger 6017.

After the second DCDC charger 6017 receives the charging parameter, the second DCDC charger 6017 may convert electric energy based on the charging parameter, so that a charging terminal outputs an output voltage and an output current that correspond to the charging parameter. Therefore, the second DCDC charger 6017 can directly provide the electronic device 602 with the charging voltage and the charging current that are required by the second battery 6024.

Policy 2: A charging parameter of the second battery 6024 is obtained by the first controller 6011.

The first controller 6011 is configured to: receive voltage information of the second battery sent by the electronic device; obtain a corresponding charging parameter based on the voltage information of the second battery, and send the charging parameter to a second DCDC charger, where the charging parameter carries a charging voltage and a charging current that correspond to the second battery.

Specifically, the first controller 6011 is configured to: receive the voltage information of the second battery 6024 sent by the electronic device 602; obtain a corresponding charging parameter based on the voltage information of the second battery 6024; and send the charging parameter to the second DCDC charger 6017.

Similarly, after receiving the charging parameter, the second DCDC charger 6017 may convert electric energy to provide the electronic device 602 with the charging voltage and the charging current that are required by the second battery 6024.

Both the first controller 6011 and the second controller 6021 described in the foregoing embodiments each include an I/O interface. When an emergency occurs, a charging process can be quickly interrupted by using the I/O interface. For ease of description, the I/O interfaces of the first controller 6011 and the second controller 6021 are not described in detail in the following embodiments.

For ease of description, the foregoing Policy 2 is used as an example to describe a working procedure of the charging system.

For ease of understanding by a person skilled in the art, the following describes a working procedure of the charging system in two phases. The two phases include a preparation phase and a charging phase.

Embodiment 2 describes the preparation phase of the charging system. The charging phase of the charging system is described in detail in a subsequent Embodiment 3.

The following describes the preparation phase of the charging system.

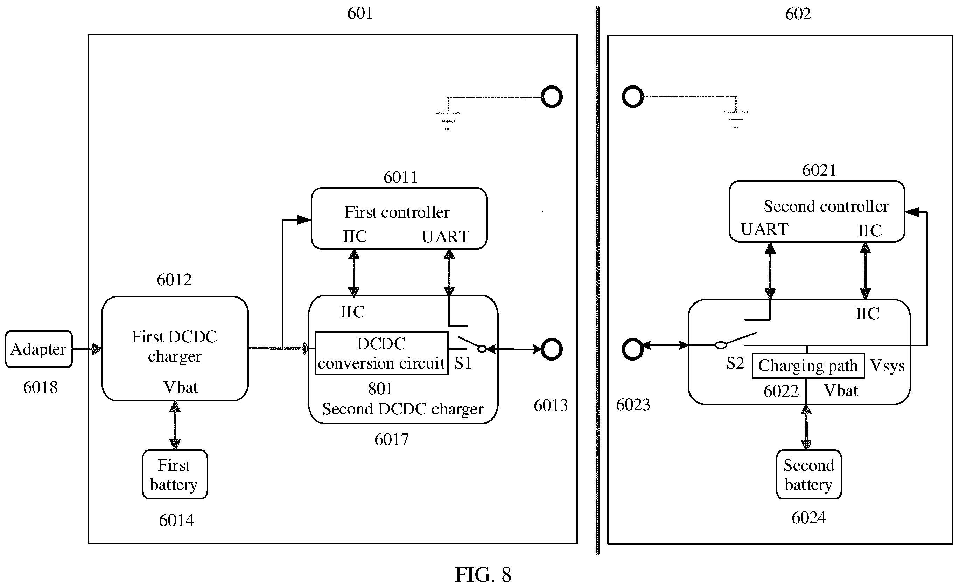

FIG. 8 is a schematic diagram of a charging system in a preparation phase according to an embodiment of this application.

The second DCDC charger 6017 of the charging apparatus 601 includes: a DCDC conversion circuit 801 and a first switch module S1. The DCDC conversion circuit 801 is configured to adjust an output voltage based on a voltage comparison result, and adjust an output current based on a current comparison result.

An input end of the DCDC conversion circuit 801 is an input end of the second DCDC charger 6017; an output end of the DCDC conversion circuit 801 is connected to a first end of the first switch module S1, a second end of the first switch module S1 is an output end of the second DCDC charger 6017, and a third end of the first switch module S1 is connected to a first communication interface UART of the first controller 6011.

The electronic device 602 further includes a third switch module S2.

A first end of the third switch module S2 is connected to the receiving terminal 6023, a second end of the third switch module S2 is connected to a first end of the charging path 6022, and a third end of the third switch module S2 is connected to a second communication interface UART of the second controller 6021.

It can be learned from the figure that an initial state of the first switch module S1 may be that the third end and the second end of the first switch module S1 are connected, that is, the first communication interface UART and the charging terminal 6013 are in a connected state, and the first switch module S1 works in a communication mode. Alternatively, an initial state of the first switch module S1 may be that the first end and the second end of the first switch module S1 are connected, that is, the output end of the DCDC conversion circuit 801 and the charging terminal 6013 are in a connected state, and the first switch module S1 works in a charging mode.

Similarly, an initial state of the third switch module S2 may be that the first end and the second end of the third switch module S2 are connected, that is, the first end of the charging path 6023 and the receiving terminal 6023 are in a connected state, and the third switch module S2 works in a charging mode. Alternatively, an initial state of the third switch module S2 may be that the first end and the third end of the third switch module S2 are connected, that is, the second communication interface UART and the charging terminal 6023 are in a connected state, and the third switch module S2 works in a communication mode. Alternatively, an initial state of the third switch module S2 may be a high impedance state, that is, neither the second end nor the third end of the third switch module S2 is connected to the first end of the third switch module S2.

In a preparation phase of the charging system, a working process of the charging system varies with the initial state of the first switch module S1, and the working process of the charging system varies with the initial state of the third switch module S2. In other words, the working process of the charging system varies with the initial state of the first switch module S1 and the initial state of the third switch module S2.

For ease of understanding by a person skilled in the art, the following describes in detail a working procedure of the charging system in two different cases.

The first case is as follows: An initial state of the first switch module S1 is that the first end and the second end of the first switch module S1 are connected, and an initial state of the third switch module S2 is a high impedance state.

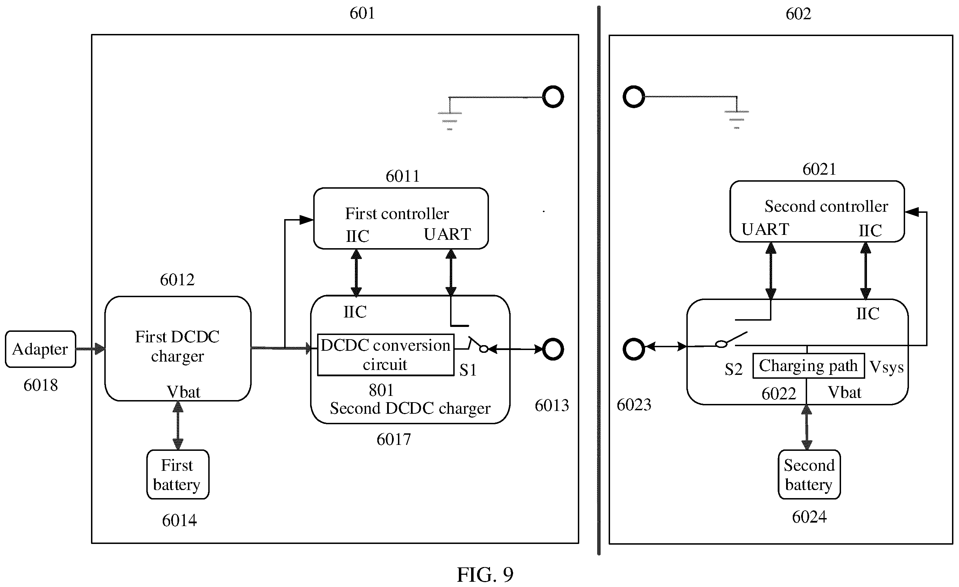

FIG. 9 is a schematic diagram of an initial state of a charging system according to an embodiment of this application.

It can be learned from the figure that, in the charging apparatus 601, the first switch module S1 works in a charging mode; an output end of the DCDC conversion circuit 801 is connected to the charging terminal 6013 by using the first switch module S1, and the first communication interface UART of the first controller 6011 and the charging terminal 6013 are in a disconnected state, that is, the first end and the second end of the first switch module S1 are connected.

In the electronic device 602, the third switch module S2 is in a high impedance state, that is, the receiving terminal 6023 and the charging path are in a disconnected state, and the receiving terminal 6023 and the second controller 6021 are in the disconnected state.

The following uses the initial state shown in FIG. 9 as an example to describe in detail a working procedure of the charging system.

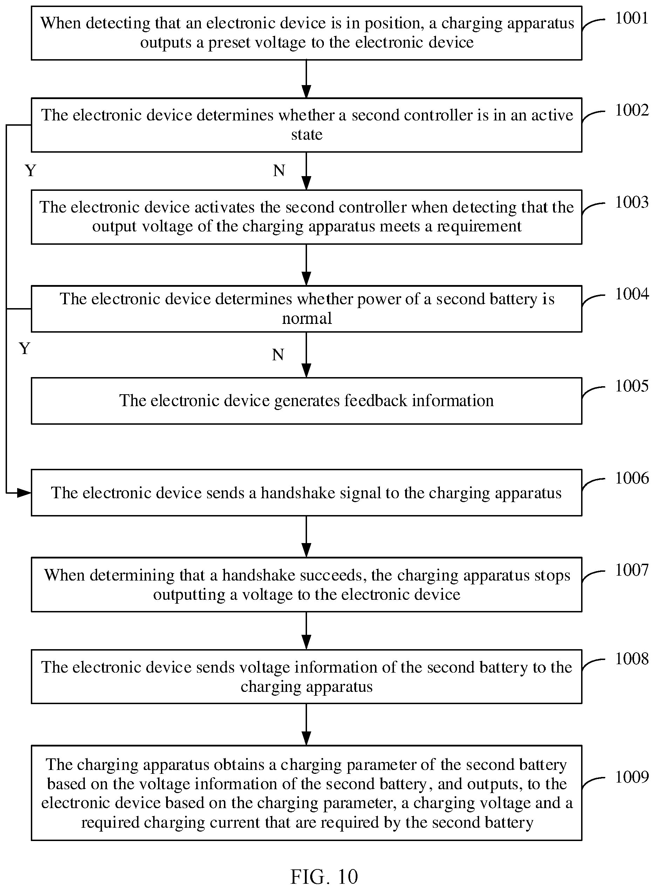

FIG. 10 is a work flowchart of a preparation phase of a charging system according to an embodiment of this application.

A working process of the preparation phase of the charging system includes the following steps.

Step 1001: When detecting that an electronic device is in position, a charging apparatus outputs a preset voltage to the electronic device.

When the electronic device needs to be charged, the electronic device needs to be connected to the charging apparatus. FIG. 5 is used as an example. The charging apparatus is a charging case 401, and the electronic device is an earbud 403. When the earbud 403 needs to be charged, the charging case 401 may be opened, and then the earbud 403 is put in the charging case 401, so that the earbud 403 is charged.

After being opened, the charging case 401 may start to detect whether the earbud 403 is put in the charging case. A manner of detecting, by the charging case 401, whether the earbud is in position is not limited in this application, and whether the earbud is in position may be detected by using a Hall effect sensor or another optical sensor, or may be detected in another manner.

A first state machine can determine, based on a received handshake signal sent by the electronic device, that the electronic device is in position, and notify a first controller that the electronic device is in position.

When the charging case 401 detects that the earbud 403 is in position, the charging case 401 outputs a voltage to the earbud 403.

When the charging case 401 detects that the earbud 403 is not in position, the charging case 401 continues to detect whether the earbud 403 is in position. In some scenarios, a user only opens the charging case 401 without putting the earbud 403 in the charging case 401, and then closes the charging case 401. After the charging case 401 is closed, when detecting that the earbud 403 is not in position, the charging case 401 no longer continues to detect whether the earbud 403 is in position. In this case, an energy loss of the charging case is reduced.

In addition, in some scenarios, whether the electronic device is in position may not be detected, that is, an in-position detection module is no longer disposed in the charging apparatus. When it is determined that a handshake between the charging apparatus and the electronic device succeeds, it can also be determined that the electronic device is in position. Compared with disposing the in-position detection module in the charging apparatus, not disposing the in-position detection module in the charging apparatus can reduce a size and costs of the charging apparatus. However, disposing the in-position detection module in the charging apparatus can provide double assurance for detecting whether the electronic device is in position.

In a process in which the charging apparatus detects that the electronic device is in position, the electronic device also detects whether the electronic device is in position, that is, the electronic device detects whether the electronic device is connected to the charging apparatus. For example, when the electronic device detects that the charging apparatus stops outputting a voltage, the electronic device may learn that the electronic device is in position.

After the charging apparatus detects that the electronic device is in position and the electronic device detects that the electronic device is in position, the charging apparatus outputs a preset voltage by default, for example, the preset voltage is 5 V To meet an actual requirement in a charging process, a person skilled in the art may alternatively set the preset voltage to another value, for example, 4 V or 6 V

After the charging apparatus outputs the preset voltage to the electronic device, the charging apparatus waits to receive the handshake signal sent by the electronic device.

After detecting the preset voltage output by the charging apparatus, the electronic device considers that the electronic device and the charging apparatus are in a connected state.

With reference to FIG. 5, in some scenarios, the user may use the earbud 403 to listen to music. When the power of the earbud 403 is insufficient, the earbud 403 may be put in the charging case 401 and the charging case 401 is closed to charge the earbud 403. In this case, the earbud 403 automatically enters a preset state. After the earbud 403 enters the preset state, the earbud 403 detects a preset voltage output by the charging case every preset period.

Step 1002: The electronic device determines whether the second controller is in an active state; and if the second controller is in the active state, perform step 1006; or if the second controller is in an inactive state, perform step 1003.

When the electronic device is in a power-on state, it means that the second controller is in the active state; or when the electronic device is in a power-off state, it means that the second controller is in an inactive state.

When the second controller is in the active state, to prepare for a next charging phase, the second controller can obtain voltage information of the second battery, and the electronic device may send the voltage information of the second battery to the charging apparatus, so that the charging apparatus obtains, based on the voltage information of the second battery, a charging current and a charging voltage that are required by the electronic device, to charge the electronic device.

When the second controller is in the inactive state, the electronic device cannot send the voltage information of the second battery to the charging apparatus. Consequently, the charging apparatus cannot learn of the charging voltage and the charging current that are required by the electronic device, and cannot charge the electronic device.

Therefore, after detecting the preset voltage output by the charging apparatus, the electronic device needs to determine whether the second controller is in the active state.

Step 1003: The electronic device activates the second controller when detecting that the output voltage of the charging apparatus meets a requirement.

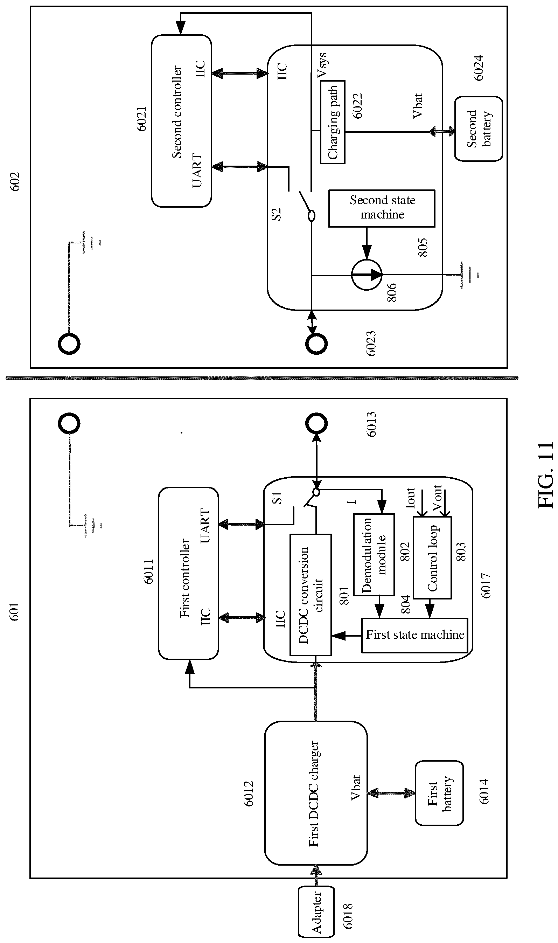

FIG. 11 is a schematic diagram of still another charging system in a preparation phase according to an embodiment of this application.

In the charging system, based on FIG. 9, the second DCDC charger of the charging apparatus 601 further includes a first state machine 804, a modem 802, and a control loop 803.

The control loop in this embodiment includes a voltage loop and a current loop, and input parameters of the control loop 803 include Iou and Vout. Iout is a detected output current of the charging terminal, and Vout is a detected output voltage of the charging terminal. Vout is compared with a charging voltage, and the output voltage of the charging terminal is controlled to be consistent with the charging voltage based on a voltage comparison result, thereby implementing closed-loop control of the voltage loop. Iout is compared with the charging current, and the output current is controlled to be consistent with the charging current based on a current comparison result, thereby implementing closed-loop control of the current loop. Iout and Vout in the figures in the following embodiments are the same, and details are not described again.

The second DCDC charger 6017 in FIG. 11 may be manufactured as a charger chip, that is, all components inside the second DCDC charger 6017 are integrated into one chip. Similarly, a second state machine 805, a modulation module 806, the charging path 6022, and the third switch module S2 on the electronic device side in FIG. 11 may be integrated into one chip. The following are the same, and details are not described subsequently.

It can be learned from the figure that the first controller 6011 in the charging apparatus 601 may communicate with the first state machine 804 by using an IIC interface. Similarly, the second controller 6021 in the electronic device 602 communicates with the second state machine 805 by using an IIC interface. The IIC interfaces in the following figures have the same meaning and are not described here.

A current I entering the demodulation module 802 in the figure carries information sent by the electronic device to the charging apparatus. For example, the electronic device sends the handshake signal to the charging apparatus by modulating a current signal. In addition, I may further carry other information, for example, the voltage information of the second battery and a charging parameter of the second battery.

Based on FIG. 9, the electronic device 602 further includes the second state machine 805 and the modulation module 806.

It can be learned from the figure that when the second controller 6021 is in an inactive state, the second state machine 805 may be connected to the charging apparatus 601 by using the receiving terminal 6023 and the charging terminal 6013, and then the second state machine may receive an output voltage of the charging apparatus 601. The second state machine 805 can determine whether the output voltage meets a requirement. When determining that the output voltage meets the requirement, the second state machine adjusts the third switch module S2. In this case, the third switch module S2 works in a charging mode to pre-charge the electronic device 602, so as to activate the second controller 6021.

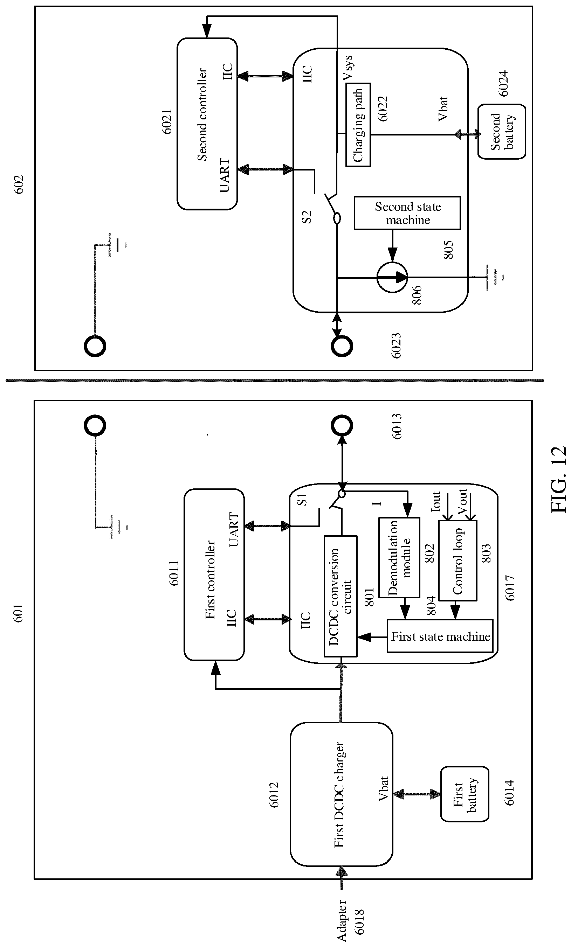

FIG. 12 is a schematic diagram of pre-charging an electronic device according to an embodiment of this application.

When the electronic device is in a power-off state, after detecting that an output voltage of the charging apparatus 601 meets a requirement, the second state machine 805 adjusts the third switch module S2 to work in a charging mode, so as to pre-charge the electronic device 602.

Step 1004: The electronic device determines whether power of the second battery is normal; and if the electronic device determines that the power of the second battery is abnormal, perform step 1005; or if the electronic device determines that the power of the second battery is normal, perform step 1006.

Step 1005: The electronic device generates feedback information.

After duration for the charging apparatus to pre-charge the electronic device exceeds a preset time period, the second state machine may determine whether the power of the second battery is normal, and if the power of the second battery is abnormal, generate feedback information, where the feedback information is used to indicate that the second battery is abnormal. That the second battery is abnormal may be that the battery is damaged.

After determining that the second battery is abnormal, the second state machine adjusts the third switch module S2, so that the third switch module S2 is in a high impedance state.

Step 1006: The electronic device sends the handshake signal to the charging apparatus.

When the electronic device is in a power-on state, the electronic device sends the handshake signal to the charging apparatus, to prepare for a subsequent charging phase.

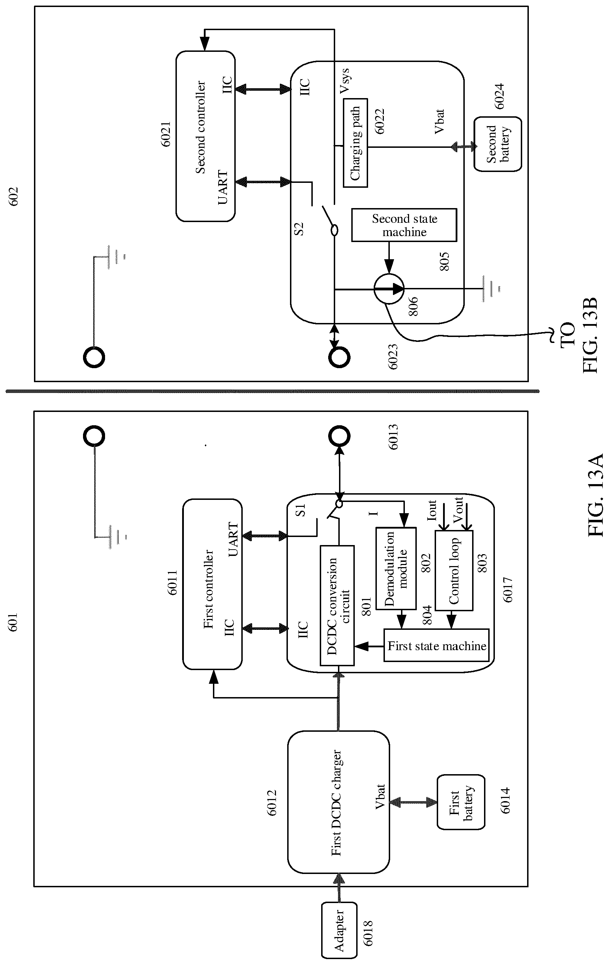

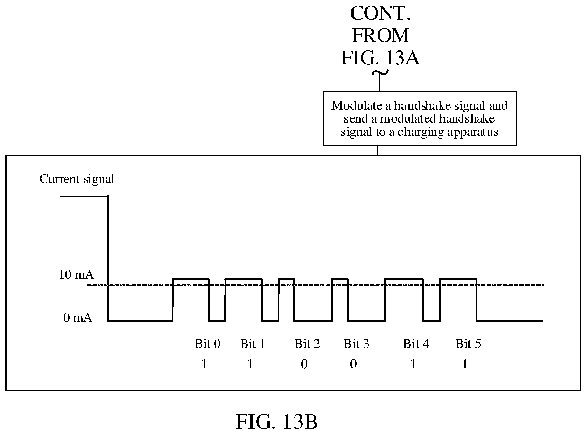

FIG. 13A and FIG. 13B are a schematic diagram of modulating a handshake signal according to an embodiment of this application.

It can be learned from the figure that the modulation module 806 is configured to modulate the handshake signal. Specifically, the second state machine 805 controls the modulation module 806 to modulate the handshake signal and then sends a modulated handshake signal to the receiving terminal 6023. Because the receiving terminal 6023 is connected to the charging apparatus 601 by using the charging terminal 6013, the electronic device 602 can send the handshake signal to the charging apparatus 601 by using the receiving terminal 6023 and the charging terminal 6013.

A specific form of the handshake signal is not limited in this embodiment of this application. The handshake signal may be a current pulse signal shown in FIG. 13A and FIG. 13B. In FIG. 13A and FIG. 13B, a feature character string including the current pulse signal is "110011", and the current pulse signal has six bits. In a specific implementation, the current pulse signal may not have six bits, for example, may have five bits or seven bits. A person skilled in the art may select a specific quantity of bits of the current pulse signal based on an actual requirement. In addition, a parity bit and a redundant bit for preventing misreading may be further added to the feature character string.

Step 1007: When determining that the handshake succeeds, the charging apparatus stops outputting a voltage to the electronic device.

When the charging apparatus does not receive the handshake signal sent by the electronic device, the charging apparatus keeps outputting a preset voltage for a preset time period. If the charging apparatus does not receive, within the preset time period, the handshake signal sent by the electronic device, the charging apparatus stops outputting the preset voltage, so that a power loss of the charging system can be reduced.

When the charging apparatus receives the handshake signal sent by the electronic device, the charging apparatus needs to determine, based on the handshake signal, whether the handshake succeeds. If the charging apparatus determines that the handshake succeeds, the charging apparatus stops outputting a voltage to the electronic device, to prepare for a subsequent communication process.

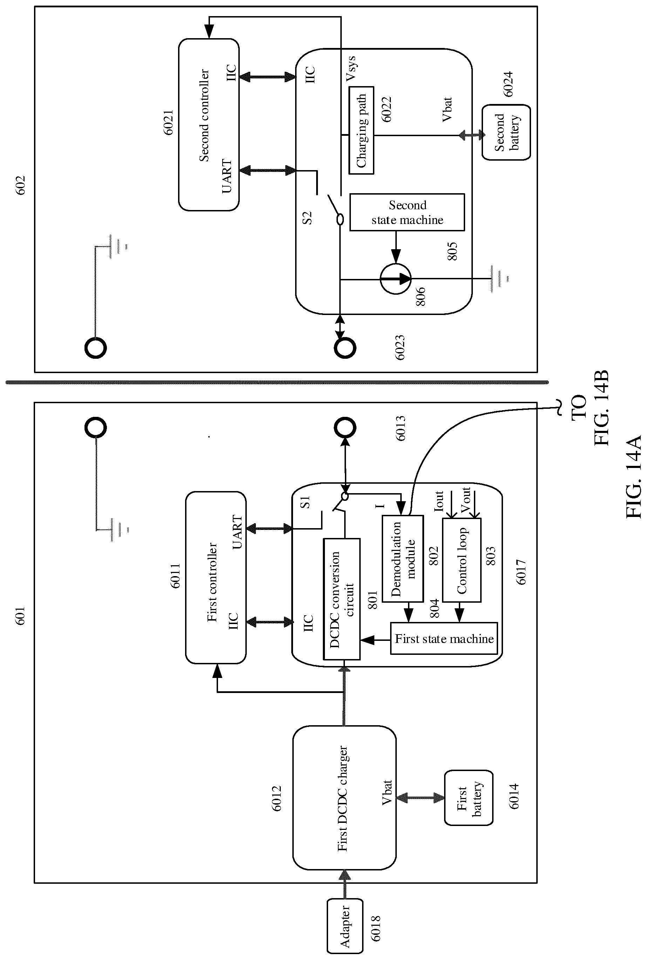

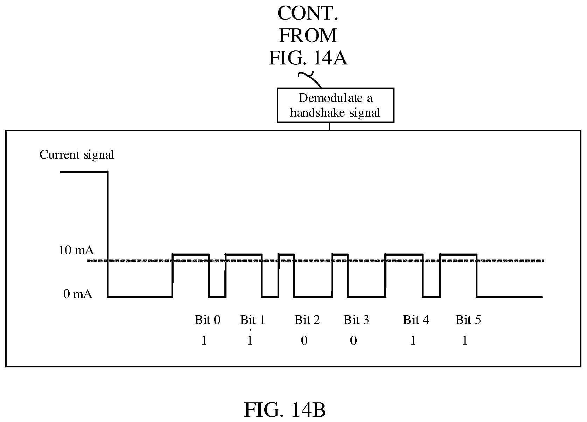

FIG. 14A and FIG. 14B are a schematic diagram of demodulating a handshake signal according to an embodiment of this application.

It can be learned from the figure that the demodulation module 802 in the figure is configured to demodulate the handshake signal. Specifically, because the receiving terminal 6023 is connected to the charging apparatus 601 by using the charging terminal 6013, the demodulation module 802 can receive, from the charging terminal 6013, the handshake signal sent by the electronic device 602, demodulate the handshake signal after receiving the handshake signal, generate a demodulation result, and send the demodulation result to the first state machine 804.

The first state machine 804 and the second state machine 805 may preset a feature character string corresponding to the handshake signal. For example, the feature character string is set to " 110011" . After the electronic device 602 sends the handshake signal to the charging apparatus 601, and the demodulation module 802 demodulates the handshake signal, if the obtained feature character string is also " 110011", the first state machine 804 confirms that the handshake between the charging apparatus 601 and the electronic device 602 succeeds. If the obtained feature character string is " 111000", that is not " 110011", in this case, the first state machine 804 confirms that the handshake between the charging apparatus 601 and the electronic device 602 fails.

Therefore, the first state machine 804 can determine, based on the demodulation result generated by the demodulation module 802, whether the handshake succeeds. If the handshake between the charging apparatus and the electronic device fails, it is determined that the charging apparatus does not match the electronic device, and a charging system formed by the unmatched charging apparatus and the electronic device does not enter a charging phase.

When the first state machine determines, based on the demodulation result, that the handshake succeeds, the first state machine sends an interrupt signal to the first controller, where the terminal signal is used to notify the first controller that the handshake succeeds.

After the first controller learns that the handshake between the charging apparatus and the electronic device succeeds, the first controller controls the second DCDC charger to stop outputting a voltage to the electronic device, so as to prepare for communication between the charging apparatus and the electronic device.

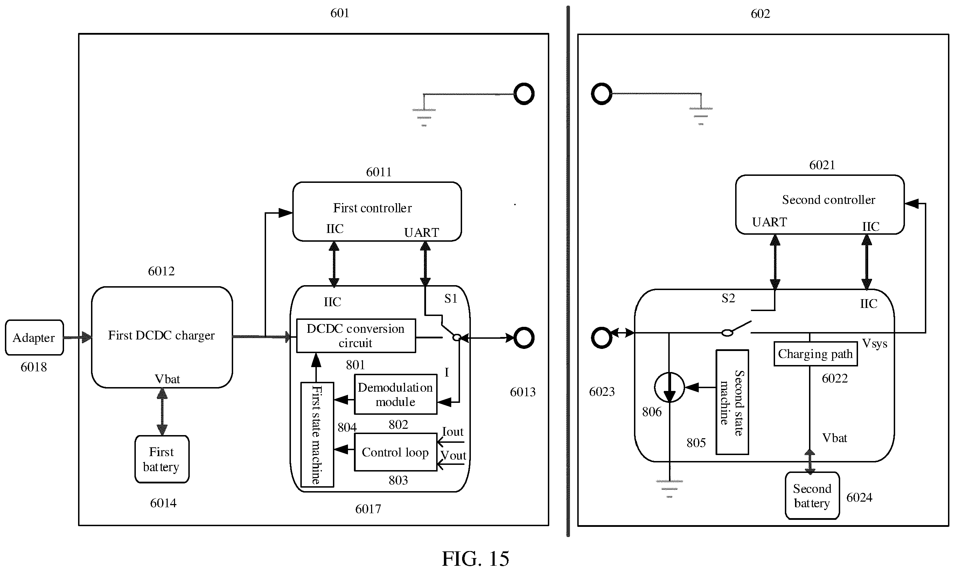

FIG. 15 is a schematic diagram of a charging system after a handshake succeeds according to an embodiment of this application.

Because an output voltage of the second DCDC charger is high, a voltage of a capacitor (not shown in the figure) connected in parallel to an output port of the second DCDC charger is high. However, a voltage of the first controller 6011 is low when the first controller 6011 works. If the first switch module S1 is directly adjusted from a charging mode to a communication mode, the first controller 6011 is burnt.

Therefore, before the first switch module S1 connects the charging terminal 6013 to the first communication interface UART, the first state machine 804 disables output of the DCDC conversion circuit 801, and does not control the first switch module S1 to connect the charging terminal 6013 to the first communication interface UART until a voltage of the charging terminal 6013 is lower than a first preset threshold, even if the first switch module S1 works in a communication mode.

In this case, it can be learned from the figure that the first switch module S1 works in the communication mode.

After determining that the handshake between the charging apparatus 601 and the electronic device 602 succeeds, the first controller 6011 needs to first control the second DCDC charger to stop outputting a voltage, connect to the ground by using the adjustment module 806 in the electronic device 602, and discharge to the ground; and then, when the voltage of the capacitor connected in parallel to the output port of the second DCDC charger is lower than the first preset threshold, control the first switch module S1 to work in the communication mode, so as to prepare for communication between the charging apparatus 601 and the electronic device 602.

Step 1008: The electronic device sends the voltage information of the second battery to the charging apparatus. After the charging apparatus stops outputting a voltage to the electronic device, when the electronic device detects that the voltage at the receiving terminal is lower than a second preset threshold, the electronic device confirms that the handshake succeeds, and adjusts the third switch module to work in the communication mode.

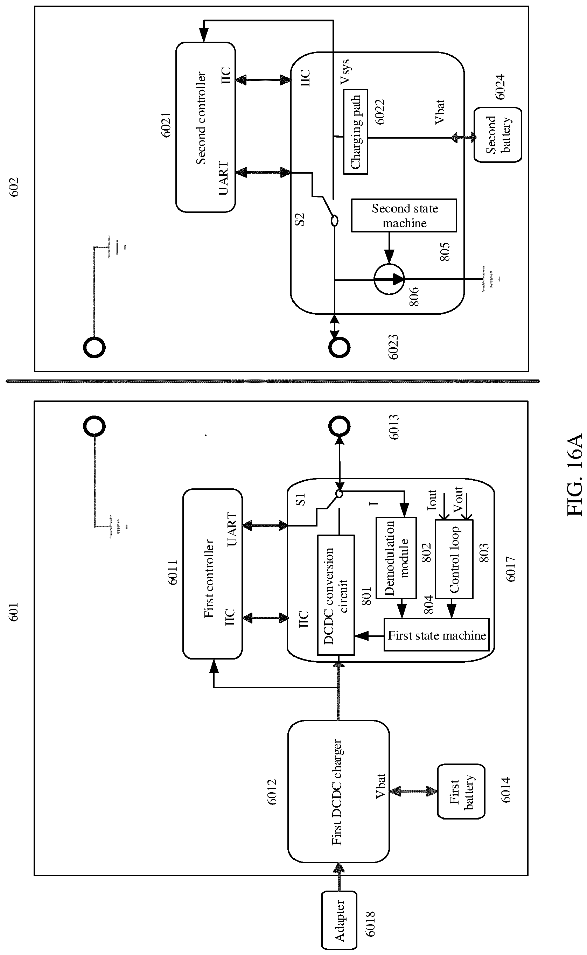

FIG. 16A is a schematic diagram of a charging system in a communication state according to an embodiment of this application.

It can be learned from the figure that the first switch module S1 works in the communication mode, and the second switch module S3 also works in the communication mode, so that communication between the charging apparatus 601 and the electronic device 602 can be implemented. With reference to FIG. 16A, the following describes in detail a communication process between the charging apparatus 601 and the electronic device 602.

After communication is established between the charging apparatus and the charging device, the second controller can obtain the voltage information of the second battery based on state information of the second battery, and send the voltage information of the second battery to the first controller by using the second communication interface, the receiving terminal, the charging terminal, and the first communication interface.

After receiving the voltage information of the second battery sent by the electronic device, the charging apparatus may determine, based on the voltage information of the second battery, whether power of the second battery is greater than a preset power threshold, and further determine whether to charge the electronic device.

When the power of the second battery is greater than or equal to the preset power threshold, it indicates that standby time of the electronic device is long, and the electronic device does not enter a charging phase. This reduces a quantity of times of charging the electronic device by the charging apparatus.

When the current of the second battery is less than the preset power threshold, it indicates that standby time of the electronic device is short, and the electronic device is ready to enter a charging phase, to charge the electronic device. This increases the standby time of the electronic device.

The preset power threshold is not limited in this application. The preset power threshold may be 85% of a total capacity of the second battery. A person skilled in the art may set the preset power threshold to another value, for example, 90% or 95%, based on an actual requirement.

When determining that the electronic device needs to be charged, the charging apparatus adjusts the working modes of the first switch module and the third switch module, to ensure that the first switch module and the third switch module in the electronic device both work in the charging mode in a subsequent charging phase.

FIG. 12 is a schematic diagram of pre-charging an electronic device. In this step, working modes of the first switch module S1 and the third switch module S2 are similar when the charging apparatus pre-charges the electronic device. The following describes in detail the working modes of the first switch module S1 and the third switch module S2 in this step with reference to FIG. 12.

Specifically, when the charging apparatus 601 charges the electronic device 602, the first state machine 804 controls the first switch module S1 to connect the charging terminal 6013 and the output end of the DCDC conversion circuit 801; and the second state machine 805 controls the third switch module S2 to connect the receiving terminal 6023 and the first end of the charging path 6022.

Step 1009: The charging apparatus obtains the charging parameter of the second battery based on the voltage information of the second battery, and outputs, to the electronic device based on the charging parameter, the charging voltage and the charging current that are required by the second battery.

After the electronic device sends the voltage information of the second battery to the charging apparatus, the first controller of the charging apparatus can receive the voltage information of the second battery.

After the charging apparatus receives the voltage information of the second battery, the first controller can obtain the charging parameter of the second battery based on the voltage information of the second battery.

After the first controller obtains the charging parameter of the second battery, the first controller sends the charging parameter to the first state machine, so that the first state machine outputs, to the electronic device based on the charging parameter, the charging voltage and the charging current that are required by the second battery.

With reference to FIG. 12, the control loop 803 includes a voltage loop and a current loop. In a process in which the charging apparatus charges the electronic device, the control loop 803 is configured to perform closed-loop control on the charging voltage and the charging current output by the DCDC conversion circuit 801. For example, the first state machine is configured to control, based on the voltage comparison result and the current comparison result, the DCDC conversion circuit to perform electric energy conversion. The first state machine adjusts the output voltage and the output current based on the voltage comparison result and the current comparison result.

The foregoing describes a working procedure of a charging system including the charging apparatus and the electronic device. The following separately describes working procedures of the charging apparatus and the electronic device.

FIG. 16B-1, FIG. 16B-2 and FIG. 16B-3 are a work flowchart of a charging apparatus and an electronic device according to an embodiment of this application.

For ease of understanding by a person skilled in the art, the following describes working procedures of the charging apparatus and the electronic device by using an example in which the charging apparatus is a charging case and the electronic device is a headset.

First, a working process of the charging case is described. When the charging case charges the headset, the working process of the charging case includes the following steps.

Step 1101: Put the headset into the case.

When the headset needs to be charged, put the headset in the charging case.

Step 1102: Set S1 to a charging side by default, and output a preset voltage.

Step 1103: Determine whether there is a handshake signal; and if there is a handshake signal, perform step 1104; or if there is no handshake signal, perform step 1105.

Step 1104: Disable output of the preset voltage, and set S1 to a communication side.

After detecting the handshake signal sent by the headset, the charging case disables output of the preset voltage, and set S1 to the communication side.

Step 1105: Output the preset voltage for a fixed time period.

If the handshake signal is still not received within the fixed time period, end charging.

Step 1106: Communicate and query battery information on a headset side.

Step 1107: Determine whether a battery is fully charged; and if the battery is fully charged, perform step 1108; or if the battery is not fully charged, perform step 1109.

If the charging case learns that the headset is fully charged, the charging case ends charging; or if the charging case learns that the headset is not fully charged, the charging case continues charging.

Step 1108: End charging.

Step 1109: Set S1 to the charging side.

Step 1110: Set a corresponding charging voltage and charging current based on the battery information.

Step 1111: Start charging.

Step 1112: Receive an interrupt instruction.

Step 1113: Switch a communication channel, and then perform step 1104.

The following describes a working process of the headset. In a process in which the charging case charges the headset, the working process of the headset includes the following steps.

Step 1201: Detect an input voltage for in-position detection.

Step 1202: Determine whether the headset is turned on; and if the headset is turned on, perform step 1206; or if the headset is not turned on, perform step 1203.

Step 1203: Set S2 to a charging side.

Step 1204: Activate a system to start up.

When the headset is in a power-off state, pre-charge the headset to activate the headset system to start up.

Step 1205: Determine whether a battery capacity is normal after a preset time period; and if the battery capacity is normal, perform step 1206; or if the battery capacity is abnormal, perform step 1207.

Step 1206: Send a handshake signal.

Step 1207: Report a battery fault.

Step 1208: Determine whether the input voltage has a drop; and if the input voltage has a drop, perform step 1211; or if the input voltage does not have a drop, perform step 1209.

Step 1209: Set S2 to a high impedance state.

When the input voltage drops, it indicates that the handshake between the headset and the charging case succeeds, that is, the headset matches the charging case. When the input voltage does not drop, it indicates that the handshake between the headset and the charging case fails, that is, the headset does not match the charging case.

Step 1210: Report an illegal charging case.

Step 1211: Set S3 to a communication side.

Step 1212: Transfer battery information of the headset.

Step 1213: Set S2 to the charging side.

Step 1214: Start charging.

Step 1215: Determine whether the battery is fully charged; and if the battery is fully charged, perform step 1217; or if the battery is not fully charged, perform step 1216.

Step 1216: Transfer a related adjustment signal, and then perform step 1211.

Step 1217: Transfer a charging end signal.

The foregoing describes the charging apparatus by using the charging case only as an example, and describes the electronic device by using the headset as an example. In a process in which the charging case charges the headset, for a process of interaction between the charging case and the headset, refer to FIG. 10, and step 1001 to step 1009. Details are not described herein again. In the first case, the charging apparatus communicates with a wearable setting in advance. The charging apparatus can obtain the voltage information of the second battery sent by the electronic device, and then the first controller can obtain the charging parameter of the second battery based on the voltage information of the second battery. Further, the first state machine can control, based on the charging parameter, the DCDC conversion circuit to directly output, to the second battery, the charging voltage and the charging current that are required by the second battery, to charge the second battery.

The first case is described above, and a second case is described below.

The second case is as follows: An initial state of the first switch module S1 is that the third end and the second end of the first switch module S1 are connected, and an initial state of the third switch module S2 is that the first end and the third end of the third switch module are connected.

In the second case, both the initial state of the first switch module S1 and the initial state of the third switch module S2 of the charging system are working in the communication mode.

The following describes in detail a working process of the charging system.

FIG. 17 is a work flowchart of a preparation phase of still another charging system according to an embodiment of this application.

A working process of the preparation phase of the charging system includes the following steps.

Step 1701: When detecting that an electronic device is in position, a charging apparatus determines whether a communication request sent by the electronic device is received; and if the communication request sent by the electronic device is received, perform step 1708, or if the communication request sent by the electronic device is not received, perform 1702.

In step 1701, a specific process in which the charging apparatus detects whether the electronic device is in position is similar to that in step 1001, and details are not described herein again.

When the charging apparatus detects that the electronic device is in position, a third switch module S2 works in a communication mode by default. When the charging apparatus does not detect that the electronic device is in position, the third switch module S2 is in a high impedance state by default. For detecting, by the charging apparatus, whether the electronic device is in position, refer to the foregoing descriptions. Details are not described herein again.

If the electronic device 602 is in a power-off state, the second controller 6021 is not activated, and further, the second controller 6021 cannot communicate with the first controller 6011 by using the second communication interface UART, the receiving terminal 6023, the charging terminal 6013, and the first communication interface UART. Therefore, after detecting an output voltage of the receiving terminal 6023, the second state machine 805 first controls the third switch module S2 to work in a charging mode, to pre-charge the second battery 6024, so as to activate the second controller 6021.

FIG. 16A is a schematic diagram of an initial state of still another electronic device.

If the electronic device 602 shown in FIG. 16A is in a power-on state, the second controller 6021 is in an active state. In this case, the third switch module S2 works in a communication mode. Therefore, the second controller 6021 can communicate with the first controller 6011 by using the second communication interface UART, the receiving terminal 6023, the charging terminal 6013, and the first communication interface UART, to implement communication between the charging apparatus 601 and the electronic device 602.

Compared with the first case, in the second case, after the charging apparatus 601 detects that the electronic device 602 is in position, the electronic device 602 may first send a communication request to the charging apparatus 601. After receiving the charging request, the charging apparatus may determine that the charging apparatus 601 matches the electronic device 602, and the electronic device 602 does not need to send a handshake signal to the charging apparatus 601 again.

Step 1702: The charging apparatus outputs a preset voltage to the electronic device.

After the charging apparatus detects that the electronic device is in position, the electronic device actively sends a communication request to the charging apparatus. If the charging apparatus does not receive the communication request sent by the electronic device, the charging apparatus determines that the electronic device is in the power-off state. The power-off state is caused by insufficient power of a second battery in the electronic device, and when the electronic device is in the power-off state, the second controller in the electronic device is not activated.

When the second controller in the electronic device is not activated, the communication request cannot be sent. Therefore, the charging apparatus needs to pre-charge the electronic device to activate the second controller, so that the second controller can send the communication request to the first controller.

Step 1703: The electronic device activates the second controller when detecting that the output voltage of the charging apparatus meets a requirement.

An initial state of the first switch module S1 is that the third end and the second end of the first switch module S1 are conducted, that is, the first switch module S1 works in a communication mode.

To enable the charging apparatus 601 to pre-charge the electronic device 602, the working mode of the first switch module S1 needs to be adjusted to the charging mode.

Specifically, the first state machine 804 controls the first end and the second end of the first switch module S1 to be connected, that is, controls the first switch module S1 to work in the charging mode.

When the first switch module S1 works in the charging mode, an output end of the DCDC conversion circuit 801 is connected to the charging terminal 6013, and further, the first state machine 804 controls the DCDC conversion circuit 801 to output a preset voltage to pre-charge the electronic device 602.

After pre-charging the electronic device 602 for a preset time period, the charging apparatus 601 may activate the second controller 6021.

For subsequent step 1004 to step 1009, refer to FIG. 10. Details are not described herein again.

The foregoing describes a working procedure of a charging system including the charging apparatus and the electronic device. The following separately describes working procedures of the charging apparatus and the electronic device.

FIG. 18A and FIG. 18B are a work flowchart of still another charging apparatus and electronic device according to an embodiment of this application.

For ease of understanding by a person skilled in the art, the following describes working procedures of the charging apparatus and the electronic device by using an example in which the charging apparatus is a charging case and the electronic device is a headset.

First, a working process of the charging case is described. When the charging case charges the headset, the working process of the charging case includes the following steps.

Step 1801: Perform in-position detection.

Step 1802: Set S1 to a communication side by default.

Step 1803: Attempt to communicate; if the communication succeeds, perform step 1106; or if the communication fails, perform step 1804.

The charging case attempts to communicate with the headset.

Step 1804: Output a preset voltage.

Step 1805: Receive a handshake signal, and report a communication instruction.

After receiving the handshake signal sent by the headset, the charging case notifies a first controller to prepare to communicate with a second controller in the headset.

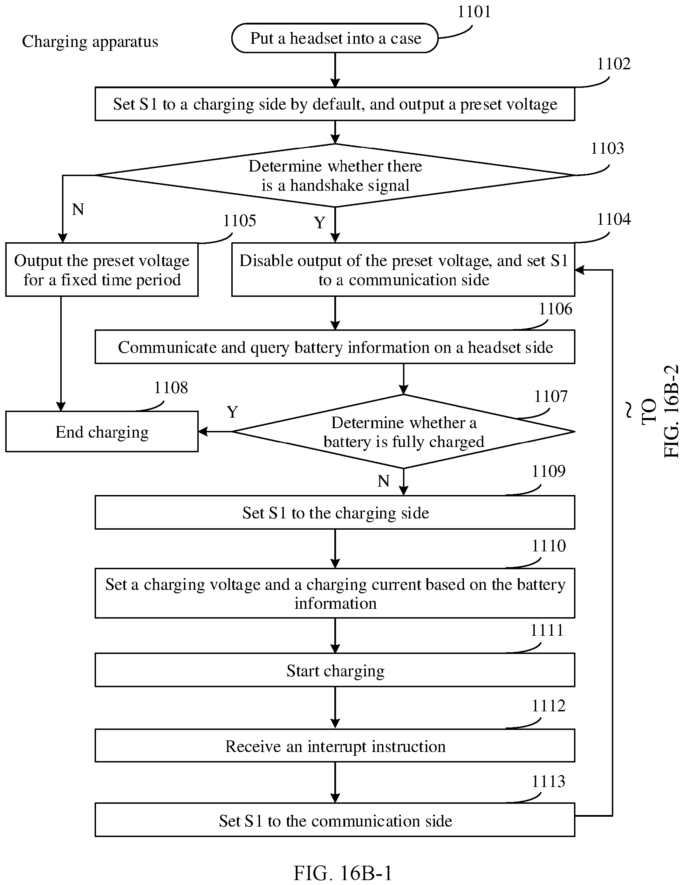

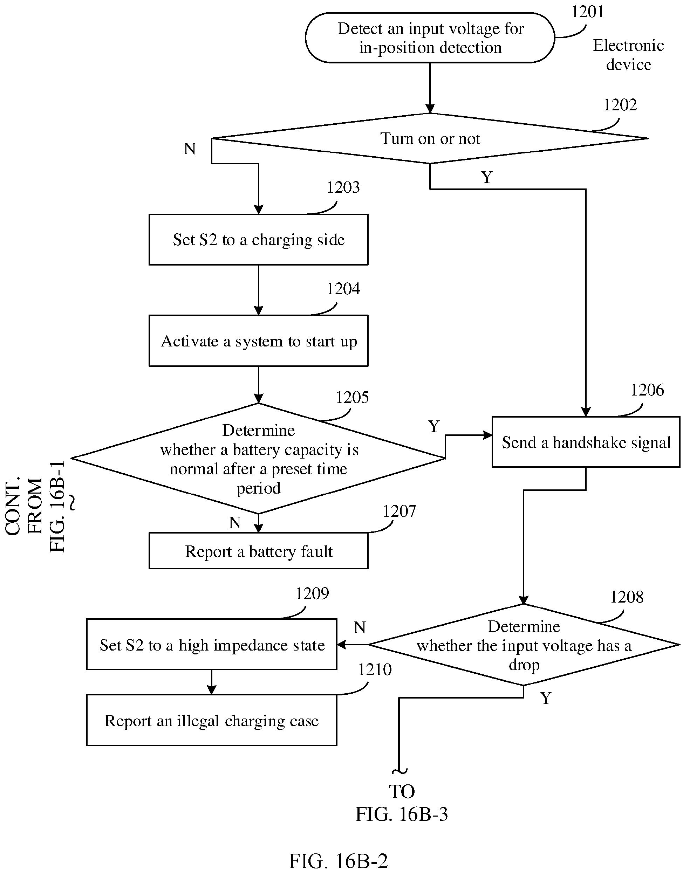

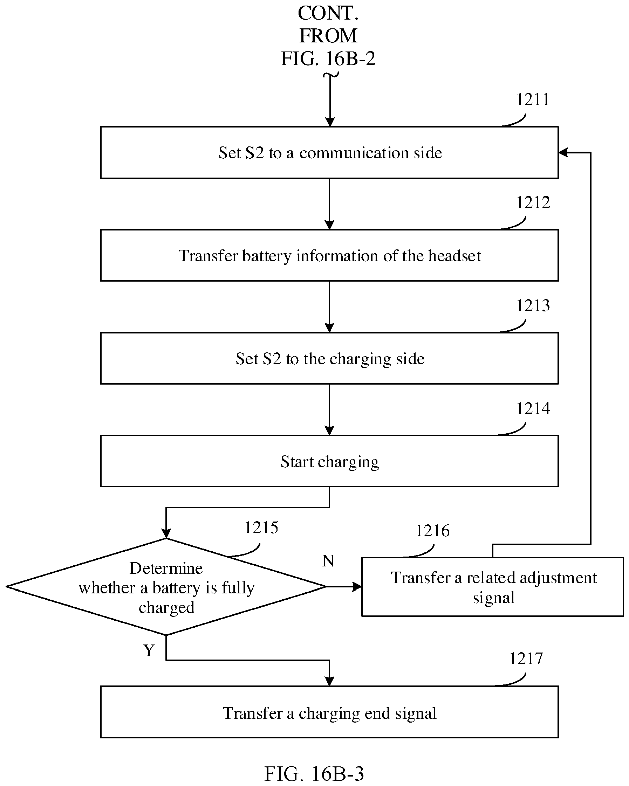

For step 1106 to step 1113, refer to FIG. 16B-1. Details are not described herein again. In step 1108, after charging ends, the charging case sets S1 to the communication side by default.

The following describes a working process of the headset. In a process in which the charging case charges the headset, the working process of the headset includes the following steps.

Step 1901: Put the headset into the case. Step 1902: Determine whether to turn on the headset; and if the headset is turned on, perform step 1903; or if the headset is not turned on, perform step 1904.

Step 1903: Set S2 to a communication side by default.

Step 1904: Set S2 to a charging side by default.

For step 1205, step 1207, and step 1212 to step 1217, refer to FIG. 10. Details are not described herein again.

Step 1908: Send a handshake signal, and set S2 to the communication side.

When the headset has sufficient power, the headset sends a handshake signal to the charging case to notify the charging case to communicate with the headset.

Compared with the first case, in the second case, an initial state of the first switch module is that the third end and the second end of the first switch module are connected, that is, when the first switch module works in a communication mode, the electronic device may first send a communication request to the charging apparatus by using the second controller, and after receiving the communication request, the first controller of the charging apparatus may determine that the electronic device matches the charging apparatus, so that the electronic device does not need to send a handshake signal to the charging apparatus again, thereby simplifying a working process of the charging system.

### System Embodiment 3

The preparation phase of the charging system is described in the foregoing embodiment, and the charging phase of the charging system is described in this embodiment.

When the charging system is in the charging phase, the charging apparatus charges the electronic device. The first state machine controls the first switch module to connect the charging terminal to the output end of the DCDC conversion circuit, and controls, based on the charging parameter, the DCDC conversion circuit to perform electric energy conversion, so that the DCDC conversion circuit can directly output the charging voltage and the charging current that are required by the second battery.

FIG. 19 is a schematic diagram of a charging phase of a charging system according to an embodiment of this application.

It can be learned from the figure that the charging phase of the charging system includes a trickle charging phase, a constant-current charging phase, a constant-voltage charging phase, and a charging end phase. In the trickle charging phase, an electronic device uses an LDO charging mode. In the constant-current charging phase and the constant-voltage charging phase, the electronic device uses a bypass charging mode.

This embodiment does not specifically limit a quantity of phases into which the constant-current charging phase is divided, and the constant-current charging phase may be divided into a plurality of phases, for example, a CC1 phase, a CC2 phase, and a CC3 phase. CV in the figure indicates the constant-voltage charging phase. CV1, CV2, and CV3 indicate voltage thresholds for distinguishing the CC1, CC2, and CC3 phases during the constant-current charging phase.

In the trickle charging phase, a second battery is charged by using the LDO charging mode shown in the figure. When a voltage of the second battery reaches a pre-charging threshold, a second state machine in the electronic device actively generates an INT interrupt by using an I/O interface, so that the electronic device communicates with a charging apparatus and transfers a charging parameter of the second battery. In this case, the charging apparatus charges the electronic device based on the charging parameter of the second battery. When the voltage of the second battery is less than the pre-charging threshold, a charging phase corresponding to the second battery is the trickle charging phase. Therefore, only a small amount of communication is required between the electronic device and the charging apparatus to complete the entire charging process.

In the figure, a curve A represents a voltage of the second battery, and a curve B represents a charging current of the second battery.

When the second battery has different voltages, the second battery is in different charging phases. Therefore, the charging phase of the second battery may be determined based on voltage information of the second battery.

A second controller in the electronic device can obtain the voltage information of the second battery, and determine the charging phase of the second battery based on the voltage information of the second battery. The following separately describes in detail the trickle charging phase, the constant-current charging phase, the constant-voltage charging phase, and the charging end phase.

It can be learned from FIG. 19 that, when the voltage of the second battery of the electronic device is less than the pre-charging threshold, the charging apparatus can determine that the charging phase of the second battery is the trickle charging phase during charging of the electronic device.

The pre-charging threshold is not limited in this application. The pre-charging threshold may be 2.8 V or 3 V A person skilled in the art may select a proper pre-charging threshold based on an actual requirement.

With reference to FIG. 12, in the trickle charging phase, the charging apparatus 601 outputs a relatively small voltage to the electronic device 602, so as to maintain working of a second controller 6021 of the electronic device 602. In this case, the second controller 6021 can adjust an impedance of a charging path, to maintain charging of a second battery 6024 with a relatively small constant charging current in the trickle charging phase.

In the trickle charging phase, as a charging time increases, power of the second battery 6024 increases, and further, a voltage of the second battery 6024 also increases. The second controller 6021 can detect the voltage of the second battery 6024 in real time or every preset period. When the second controller 6021 detects that the voltage of the second battery 6024 is greater than or equal to the pre-charging threshold, the charging phase of the second battery 6024 changes from the trickle charging phase to the constant-current charging phase.

The second controller 6021 can detect the voltage information of the second battery, and actively perform active interruption, so that the charging apparatus establishes a communication connection to the electronic device, and further adjusts the charging voltage and the charging current.

In a process of the constant-current charging phase, the second controller 6021 can transfer information to the second state machine 805 by using an IIC interface, so that the second state machine 805 controls the modulation module 806 to send a pulse signal to the charging apparatus, and the first state machine 804 controls the demodulation module 802 to send, to the first controller 6011, a demodulation result generated after the demodulation module 802 demodulates the pulse signal, to notify the first controller 6011 to prepare to communicate with the second controller 6021. In this case, the first controller 6011 receives the voltage information of the second battery 6024 sent by the second controller 6021.

For a specific process in which the second controller 6021 sends the voltage information of the second battery 6024 to the first controller 6011, refer to Embodiment 2. Details are not described herein again.

After receiving the voltage information of the second battery 6024 sent by the second controller, the first controller 6011 obtains a charging parameter of the second battery 6024 based on the voltage information of the second battery 6024, and sends the charging parameter to a second DCDC charger. The second DCDC charger includes a DCDC conversion circuit 801. The DCDC conversion circuit 801 can output, to the charging terminal 6013 based on the charging parameter of the second battery 6024, a charging voltage and a charging current that are required by the second battery 6024.

In another case, the second controller 6021 may obtain the charging parameter of the second battery 6024 in advance based on the voltage information of the second battery 6024, and send the charging parameter to the first controller 6011.

Different from that the voltage information of the second battery 6024 is sent by the second controller 6021, the charging parameter of the second battery 6024 is obtained by the second controller 6021 instead of the first controller 6011.

To enable the charging voltage and the charging current that are output by the DCDC conversion circuit 801 to the charging terminal 6013 to be directly transmitted to the second battery 6024, the second controller 6021 controls the charging path 6022 to work in a bypass state, to charge the second battery 6024.

FIG. 20 is a schematic diagram of a charging path according to an embodiment of this application.

It can be learned from the figure that when the second controller 6021 controls the charging path 6022 to work in the bypass state, an impedance of the charging path is the smallest, so that the charging apparatus 601 directly charges the second battery 6024 of the electronic device 602 by using a charging voltage and a charging current that are output by the charging terminal 6013.

A specific implementation form of the charging path is not limited in this application. The following provides detailed descriptions with reference to the accompanying drawings.

FIG. 21 is a schematic diagram of still another charging path according to an embodiment of application.

The charging path includes a second switch module S3.

A first end of the second switch module S3 is a first end of the charging path 6022, and a second end of the second switch module S3 is a second end of the charging path 6022.

An impedance of the second switch module S3 is adjustable. When determining that a charging phase of a charging system is a constant-current charging phase, the second controller 6021 adjusts the impedance of the second switch module S3, so that the impedance of the second switch module S3 is the smallest, approximately achieving that the first end of the charging path 6022 is directly connected to the second end of the charging path 6022. Therefore, the charging apparatus 601 directly charges the second battery 6024 of the electronic device 602 by using a charging voltage and a charging current that are output by the charging terminal 6013.

During actual circuit design, the second switch module may be implemented by using a plurality of controllable switching transistors.

FIG. 22 is a schematic diagram of a second switch module according to an embodiment of this application.

A specific implementation form of S3 is not specifically limited in this embodiment of this application. S3 may be implemented by using one switching transistor, or may be implemented by using a plurality of switching transistors. For ease of understanding by a person skilled in the art, the following uses two switching transistors as an example for description.

The second switch module S3 includes two MOS transistors connected in series.

As shown in the figure, the second switch module S3 includes a first MOS transistor Q1 and a second MOS transistor Q2, and an anti-parallel diode of Q1 and an anti-parallel diode of Q2 have opposite directions. Q1 and Q2 are connected in series, a first end of Q1 is a first end of the second switch module S3, a second end of Q1 is connected to a first end of Q2, and a second end of Q2 is a second end of the second switch module S3.

When determining that a charging phase of a charging system is a constant-current charging phase, the second controller 6021 can minimize an impedance of the second switch module S3 by adjusting states of Q1 and Q2, so that the charging apparatus 601 directly charges the second battery 6024 of the electronic device 602 by using a charging voltage and a charging current that are output by the charging terminal 6013.

FIG. 23 is a schematic diagram of still another second switch module according to an embodiment of this application.

Compared with the second switch module shown in FIG. 22, the second switch module S3 further includes a third MOS transistor Q3, and the third MOS transistor Q3 is connected in parallel to two ends of Q1 and Q2 that are connected in series. A first end of the third MOS transistor Q3 is connected to a first end of the first MOS transistor Q1, and a second end of the third MOS transistor Q3 is connected to a second end of the second MOS transistor Q2.

When the second controller 6021 determines that a charging phase of a charging system is a constant-current charging phase, the second controller 6021 does not need to adjust states of Q1 and Q2, but controls Q3 to be turned on, so that Q1 and Q2 connected in series are bypassed. In this case, an impedance of the second switch module S3 is the smallest, so that the charging apparatus 601 directly charges the second battery 6024 of the electronic device 602 by using a charging voltage and a charging current that are output by the charging terminal 6013.

In addition, the electronic device 602 in the charging system shown in FIG. 21 to FIG. 23 may further include a switched-capacitor converter.

For ease of description, an example in which a switched-capacitor converter is additionally disposed in the charging system shown in FIG. 21 is used below for description.

FIG. 24A is a schematic diagram of still another charging path according to an embodiment of this application.

A charging path of the electronic device 602 further includes a switched-capacitor converter 807.

The switched-capacitor converter 807 is connected in series to the second switch module S3.

An input end of the switched-capacitor converter 807 is connected to a second end of the third switch module S2, and an output end of the switched-capacitor converter 807 is connected to a first end of the second switch module S3.

However, in an actual process in which the charging apparatus 601 charges the electronic device 602, the switched-capacitor converter 807 may boost a voltage input to the switched-capacitor converter 807 and then output a boosted voltage, so that voltage adjustment can be implemented, a charging voltage for the second battery can be increased, and efficiency of charging the second battery can be improved. The switched-capacitor converter in subsequent embodiments can also implement the described functions, and details are not described subsequently.

Considering that in an actual charging process, due to impact of an internal resistance of the second battery, segmentation processing is performed again in a constant-current charging phase based on a voltage of the second battery, charging efficiency of the second battery is further improved.

In this application, a quantity of segments into which the constant-current charging phase is specifically divided is not limited, and the constant-current charging phase is divided into at least two segments. A person skilled in the art may select a specific quantity of segments based on an actual requirement.

For ease of understanding by a person skilled in the art, the following provides detailed descriptions by using an example in which a first segment, a second segment, and a third segment are divided.

In the constant-current charging phase, as a charging time increases, the voltage of the second battery also increases, that is, the voltage of the second battery changes. After the voltage of the second battery changes, a charging voltage and a charging current that are output by the charging apparatus may also change accordingly, to ensure charging efficiency of the second battery.

For example, the voltage of the second battery that is less than or equal to 4.1 V corresponds to the first segment. In the first segment of the constant-current charging phase, the charging apparatus outputs 3C to charge the electronic device. The voltage of the second battery that is greater than 4.1 V and less than or equal to 4.2 V corresponds to the second segment. In the second segment of the constant-current charging phase, the charging apparatus outputs 2C to charge the electronic device. The voltage of the second battery that is greater than 4.2 V and less than or equal to 4.3 V corresponds to the third segment. In the third segment of the constant-current charging phase, the charging apparatus outputs 1C to charge the electronic device.

Charging voltages and charging currents corresponding to the first segment, the second segment, and the third segment are not specifically limited in this application. The charging voltage and the charging current may be obtained based on voltage information of the second battery. Details are described below.

When the charging apparatus charges the electronic device, a second controller inside the electronic device can obtain the voltage of the second battery.

When the second controller detects that the voltage of the second battery is greater than 4.1 V, the second controller sends the voltage information of the second battery corresponding to the moment to the first controller, so that the charging apparatus learns that the voltage of the second battery of the electronic device changes. The first controller obtains a charging parameter of the second battery based on the voltage information of the second battery, and sends the charging parameter to the second DCDC charger, so that the second DCDC charger directly outputs a charging voltage and a charging current that are required by the second battery. In this case, charging efficiency of the second battery is improved.

Specifically, when the second controller needs to communicate with the first controller, the second controller may transfer information to the second state machine 805 by using an IIC interface, so that the second state machine 805 controls the modulation module 806 to send a pulse signal to the charging apparatus, and the first state machine 804 controls the demodulation module 802 to send, to the first controller 6011, a demodulation result generated after the demodulation module 802 demodulates the pulse signal, to notify the first controller to prepare to communicate with the second controller.

Similarly, when the second controller detects that the voltage of the second battery is greater than 4.2 V, the second controller sends voltage information of the second battery corresponding to the moment to the first controller, so that the charging apparatus outputs, to the electronic device, a charging voltage and a charging current that are required by the second battery, to charge the second battery.

In addition, the second controller may also detect the voltage information of the second battery every preset period, and send the detected voltage information to the charging apparatus, so that the second DCDC charger outputs a charging voltage and a charging current that are required by the second battery. In this case, efficient charging of the electronic device by the charging apparatus is implemented.

When the voltage of the second battery rises to a constant-voltage charging threshold, the charging system enters the constant-voltage charging phase.

The constant-voltage charging threshold is not limited in this application. The constant-voltage charging threshold may be any value between 4.15 V and 4.35 V For example, the constant-voltage charging threshold is 4.3 V

In an actual charging process, it is impossible that the voltage of the second battery does not change at all in the constant-voltage charging phase, that is, the voltage of the second battery also changes. Similarly, in the constant-voltage charging phase, segmentation processing in the constant-current charging phase may also be used.

In the constant-voltage charging phase, the second controller also needs to control the charging path to work in a bypass state, so as to minimize an impedance of the charging path. In this case, the charging apparatus directly charges the second battery of the electronic device by using a charging voltage and a charging current that are output by the charging terminal.

With reference to FIG. 19, in the constant-voltage charging phase, as a charging time increases, a charging current becomes smaller. When the charging current is lower than a charging end threshold, the second controller determines that the second battery is close to a full-power state, and the second controller may adjust the impedance of the charging path, and then end charging by using a small current. The second controller can directly disconnect the charging apparatus when determining that the second battery is in the full-power state, to end charging.

The switched-capacitor converter described above is connected in series to the second switch module. In another case, the switched-capacitor converter may alternatively be connected in parallel to the second switch module. The following provides a description with reference to FIG. 24B.

FIG. 24B is a schematic diagram of yet another charging path according to an embodiment of this application.

It can be learned from the figure that the charging path includes the switched-capacitor converter 807, a safety switch S4, and the second switch module S3.

A first end of the switched-capacitor converter 807 is connected to a second end of the third switch module S2, a second end of the switched-capacitor converter 807 is connected to a second end of the second switch module S3, a first end of the safety switch S4 is connected to the first end of the switched-capacitor converter 807, and a second end of the safety switch S4 is connected to a first end of the second switch module S3.

The safety switch S4 is turned off in a constant-voltage charging phase or a constant-current charging phase, so that electric energy is directly charged to the second battery 6024 by using the switched-capacitor converter 807. The second battery 6024 can supply power to the second controller 6021 by using S3. In another charging phase, control the safety switch to be turned on. For example, in a trickle charging phase or a pre-charging phase, S4 is turned on, and a current passes through S4 and S3 to charge the second battery 6024.

An impedance of the second switch module S3 is adjustable, so that an impedance of a charging path can be controlled in different charging phases.

The second controller 6021 can obtain a corresponding charging phase based on voltage information of the second battery; when the charging phase is the constant-current charging phase or the constant-voltage charging phase, control the second switch module S3 to turn off, and control the switched-capacitor converter 807 to work in a bypass state, so that the charging path works in the bypass state; and when the charging phase is the trickle charging phase, control the second switch module S3 to turn on. In other words, the second controller 6021 controls, in different charging phases, the switched-capacitor converter 807 and the second switch module S3 to work in different states. In addition to improving charging efficiency of the second battery 6024 in the constant-voltage charging phase and the constant-current charging phase, charging efficiency of the second battery 6024 in the charging phase can also be improved.

### System Embodiment 4

In the charging system described in the foregoing embodiments, when the charging apparatus communicates with the electronic device, charging needs to be turned off. In the charging system described below, when the charging apparatus communicates with the electronic device, a communication process can be implemented without turning off charging.

FIG. 25A is a schematic diagram of another charging system according to an embodiment of this application.

The charging system includes the charging apparatus 601 and the electronic device 602. A carrier communication module is disposed in each of the charging apparatus 601 and the electronic device 602.

The charging apparatus 601 includes a first carrier communication module 2501, and the electronic device 602 includes a second communication module 2502.

A first end of the first carrier communication module 2501 is connected to an SPI interface of the first controller 6011, and a first end of the second carrier communication module 2502 is connected to an SPI interface of the second controller 6021.

When the charging apparatus 601 needs to communicate with the electronic device 602, the charging apparatus 601 and the electronic device 602 can communicate with each other by using the first carrier communication module 2501 and the second carrier communication module 2502.

For example, the electronic device 602 performs communication, and receives voltage information of the second battery sent by the second carrier communication module 2502.

FIG. 25B is a waveform diagram of a pulse signal according to an embodiment of this application.

A specific form of the waveform diagram of the pulse signal is not limited in this application. For ease of description, the following uses the waveform diagram of the pulse signal shown in FIG. 25B as an example for description.

The waveform diagram is a waveform diagram of a pulse signal obtained after the second carrier communication module 2502 modulates voltage information of the second battery. After the second carrier communication module 2502 sends modulated voltage information to the first carrier communication module 2501, the first carrier communication module can demodulate the waveform diagram of the pulse signal, and then the electronic device 602 can transfer the voltage information of the second battery to the charging apparatus 601. In FIG. 25B, 5 V is a reference voltage. When the voltage is greater than 5 V, a feature character string corresponding to the pulse signal is " 1", and when the voltage is less than 5 V, a feature character string corresponding to the pulse signal is "0". Information is transmitted between the first carrier communication module 2501 and the second carrier communication module 2502 by sending a pulse signal corresponding to a preset feature character string, where the feature character string may be used to represent the voltage information of the second battery. In addition, the feature character string may also represent other information, for example, a handshake signal, a charging parameter of the second battery, and control information.

The second controller 6021 sends the voltage information of the second battery 6024 to the first carrier communication module 2501 by using the second carrier communication module 2502, and the first controller 6011 receives the voltage information of the second battery 6024 by using the first carrier communication module 2501, so as to implement communication between the charging apparatus 601 and the electronic device 602.

Further, after obtaining the voltage information of the second battery 6024, the first controller 6011 can obtain the charging parameter of the second battery 6024 based on the voltage information of the second battery 6024, so that the second DCDC charger 6017 outputs, based on the charging parameter, a charging voltage and a charging current that are required by the second battery 6024.

In another type of communication, the second controller 6021 may alternatively obtain the charging parameter of the second battery 6024 in advance based on the voltage information of the second battery 6024, then the second controller 6021 sends the charging parameter of the second battery 6024 to the first carrier communication module 2501 by using the second carrier communication module 2502, and the first controller 6011 receives the charging parameter of the second battery 6024 by using the first carrier communication module 2501, so as to implement communication between the charging apparatus 601 and the electronic device 602.

Further, the first controller 6011 can directly obtain the charging parameter of the second battery 6024, and the second DCDC charger 6017 outputs, based on the charging parameter, a charging voltage and a charging current that are required by the second battery 6024.

As a charging time increases, power of the second battery 6024 changes, and further, a voltage of the second battery 6024 also changes. To enable the second DCDC charger 6017 to output the charging voltage and the charging current that are required by the second battery 6024, the second controller 6021 may send the voltage information of the second battery 6024 or the charging parameter of the second battery 6024 to the first controller 6011 every preset period by using the second carrier communication module 2502 and the first carrier communication module 2501. Even if the power of the second battery 6024 changes, the second DCDC charger 6017 can still output the charging voltage and the charging current that are required by the second battery 6024.

For ease of understanding by a person skilled in the art, the following describes working procedures of a charging apparatus with a carrier communication module and an electronic device with a carrier communication module with reference to the accompanying drawings.

FIG. 25C-1 and FIG. 25C-2 are a work flowchart of yet another charging apparatus and electronic device according to an embodiment of this application.

For ease of understanding by a person skilled in the art, the following describes working procedures of the charging apparatus and the electronic device by using an example in which the charging apparatus is a charging case and the electronic device is a headset.

First, a working process of the charging case is described. When the charging case charges the headset, the working process of the charging case includes the following steps.

Step 2501: Perform in-position detection.

Step 2502: Output a preset voltage.

For step 1103, step 1105, step 1110, step 1111, and step 1113, refer to FIG. 16B-1. Details are not described herein again.

Step 2504: Receive a signal.

After a handshake between the charging case and the headset succeeds, the charging case may receive a signal sent by the headset, for example, battery state information sent by the headset. The battery state information includes voltage information, lifespan information, temperature information, and the like. This is not limited in this embodiment of this application.

Step 2512: Adjust a charging parameter during communication.

Because the charging case can directly communicate with the headset by using a carrier communication module, a charging process does not need to be turned off. When the charging case communicates with the headset, the charging parameter, for example, a charging voltage and a charging current, can also be adjusted.

The following describes a working process of the headset. In a process in which the charging case charges the headset, the working process of the headset includes the following steps.

For step 1201 to step 1202, refer to FIG. 16B-2. Details are not described herein again.

When the headset is in a power-off state, step 2603 is performed. When the headset is in a power-on state, step 2610 is performed.

Step 2603: Determine whether an input voltage meets a requirement; and if the input voltage meets the requirement, perform 2605; or if the input voltage does not meet the requirement, perform 2604.

Step 2604: Keep an input switch to be turned off.

Step 2605: Turn on the input switch.

Still refer to FIG. 25A. The input switch may be Q4 in the figure. Turn on the input switch, that is, control Q4 to be in a turned-on state, so as to charge the headset to activate a system.

Step 2606: Activate the system to start up.

Step 2607: Send a handshake signal.

Step 2608: Send state information.

Step 2609 to step 2613 are similar to step 2605 to step 2608, and a difference lies in that: when the headset is in the power-on state, the handshake signal is first sent to the charging case, and then the input switch is turned on; and when the headset is in the power-off state, the input switch is first turned on to pre-charge the headset, and then the handshake signal is sent.

Step 2612: Start charging.

Step 2613: Adjust a charging parameter during communication.

Step 2614: End the charging.

In addition, the electronic device 602 and the charging apparatus 601 can further send a handshake signal by using a carrier communication module, to determine that the charging apparatus 601 matches the electronic device 602.

In an electronic device and a charging apparatus that have a carrier communication module, a handshake signal may alternatively be sent in manners shown in FIG. 13A and FIG. 13B and FIG. 14A and FIG. 14B. To be specific, the modulation module 806 is disposed in the electronic device 602, and the demodulation module 802 is disposed in the charging apparatus 601. For a specific handshake implementation, refer to the foregoing description. Details are not described herein again.

Therefore, in a process in which the charging apparatus charges the electronic device, when the charging apparatus needs to communicate with the electronic device, the charging apparatus may communicate with the electronic device by using the carrier communication module. Therefore, a second DCDC charger does not need to be turned off, and a charging time of the charging apparatus for the electronic device can be reduced, to complete the charging process more quickly.

It can be learned from FIG. 25A that, in the charging system, an impedance network 2503 is disposed in the first carrier communication module 2501, and an impedance network 2504 is disposed in the second carrier communication module 2502. Both the impedance network 2503 and the impedance network 2504 are configured to implement impedance matching.

A first end of the impedance network 2503 is connected to an output end of the second DCDC charger 6017, and a second end of the impedance network 2503 is connected to the charging terminal 6013.

A first end of the impedance network 2504 is connected to the receiving terminal 6023, and a second end of the impedance network 2504 is connected to a fourth switching transistor Q4.

A first end of the fourth switching transistor Q4 is connected to a first end of the impedance network 2504, and a second end of the fourth switching transistor Q4 is connected to the second switch module S3. An implementation of the second switching transistor Q4 is not specifically limited in this embodiment of this application. For example, the fourth switching transistor Q4 may be implemented by two MOS transistors, and anti-parallel diodes of the two MOS transistors have opposite directions.

In a process in which the charging apparatus 601 charges the electronic device 602, the second controller 6021 can adjust a state of the fourth switching transistor Q4 to adjust a charging voltage and a charging current for the second battery 6024, so as to improve charging efficiency of the second battery 6024. In addition, the fourth switching transistor Q4 can prevent electric leakage from the electronic device to the charging apparatus, so that S4 can protect the second battery. The second controller 6021 may alternatively adjust an impedance of the second switch module S3, and when it is obtained, based on a voltage of the second battery 6024, that a corresponding charging phase is a constant-current charging phase or a constant-voltage charging phase, control the impedance of the second switch module S3 to be the smallest.

In addition, the charging path may further include a switched-capacitor converter, so that a voltage can be adjusted.

FIG. 26 is a schematic diagram of yet another charging system according to an embodiment of this application.

A charging path of the electronic device 602 further includes the switched-capacitor converter 807.

The switched-capacitor converter 807 is connected in series to the second switch module S3.

An input end of the switched-capacitor converter 807 is connected to a second end of the impedance network 2504, and an output end of the switched-capacitor converter 807 is connected to a first end of the second switch module S3.

However, in an actual process in which the charging apparatus 601 charges the electronic device 602, the switched-capacitor converter 807 may boost a voltage input to the switched-capacitor converter 807 and then output a boosted voltage, so that a voltage can be adjusted to charge the second battery 6024.

### System Embodiment 5

All the charging apparatuses described in the foregoing embodiments each include a first controller. The first controller may communicate with a second controller in the electronic device, and further write a program into the electronic device, to upgrade the electronic device. However, in some scenarios, when the electronic device does not need to upgrade software by using the charging apparatus, the first controller does not need to be disposed in the charging apparatus. The following describes, in Embodiment 5, a case in which no first controller is disposed in the charging apparatus.

FIG. 3 is a schematic diagram of a charging apparatus and an electronic device. In FIG. 3, the charging apparatus is a charging cradle, and the electronic device is a smart band.

However, the smart band does not need to upgrade software by using the charging cradle. Therefore, a controller does not need to be disposed in the charging cradle.

FIG. 27A is a schematic diagram of still another charging system according to an embodiment of this application.

The charging apparatus 601 of the charging system includes the second DCDC charger 6017, and the second DCDC charger 6017 includes the first state machine 804 and the demodulation module 802.

The demodulation module 802 is configured to: receive, from the charging terminal 6013, a handshake signal sent by the electronic device 602, demodulate the handshake signal, and send a demodulation result to the first state machine 804.

The first state machine 804 can confirm, based on the demodulation result, whether the handshake succeeds. For a specific confirmation process, refer to Embodiment 2, and FIG. 13A and FIG. 13B and FIG. 14A and FIG. 14B. Details are not described herein again.

When determining, based on the demodulation result, that the handshake succeeds, the first state machine 804 receives a charging parameter of the second battery 6024 sent by the electronic device 602. In another case, the first state machine 804 receives voltage information of the second battery 6024 sent by the electronic device 602, and obtains the charging parameter of the second battery 6024 based on the voltage information of the second battery 6024.

After obtaining the charging parameter of the second battery 6024, the first state machine 804 may control the DCDC conversion circuit 801 to perform electric energy conversion, so that an output end of the DCDC conversion circuit 801 outputs a charging voltage and a charging current that are required by the second battery 6024.

The electronic device 602 includes a fourth switching transistor.

A second end of the fourth switching transistor Q4 is connected to a first end of the second switch module S3, and a second end of the second switch module S3 is configured to connect to the second battery 6024.

For specific implementations of the fourth switching transistor Q4 and the second switch module S3, refer to the description in the foregoing embodiment, and details are not described herein again.

For ease of understanding by a person skilled in the art, the following uses the charging system shown in FIG. 27A as an example to describe working procedures of a charging apparatus and an electronic device in the charging system.

FIG. 27B-1 and FIG. 27B-2 are a work flowchart of another charging apparatus and electronic device according to an embodiment of this application.

For ease of understanding by a person skilled in the art, an example in which the charging apparatus is a charging cradle and the electronic device is a smart band is used below for description.

A working process of the charging cradle is first described. In a process in which the charging cradle charges the smart band, the working process of the charging cradle includes the following steps.

For step 2501, step 2502, step 1103, step 1105, step 2512, and step 1110 to step 1113, refer to the descriptions in the foregoing embodiments. Only a difference from the foregoing embodiments is described herein.

Step 2704: Receive a pulse signal. A feature character string corresponding to the pulse signal can represent a charging parameter of a second battery. The smart band can transmit the charging parameter of the second battery to the charging cradle by using the pulse signal. The charging cradle can parse out the charging parameter based on the received pulse signal, and output a charging voltage and a charging current that are required by a battery of the smart band. The pulse signal is subsequently described in detail in FIG. 29 and FIG. 30.

The following describes a working process of the smart band. In a process in which the charging cradle charges the smart band, the working process of the smart band includes the following steps.

The working process of the smart band is similar to the working process of the headset described in FIG. 25C-1 and FIG. 25C-2 in the foregoing embodiment. For a specific process, refer to the description in the foregoing embodiment. The following describes only a difference.

After a handshake between the smart band and the charging cradle succeeds, the smart band sends a pulse signal to the charging cradle, where the pulse signal can carry the charging parameter of the second battery.

Step 2808: Send the pulse signal.

Step 2810 is similar to step 2808.

After the smart band transmits the charging parameter of the second battery to the charging cradle, the charging cradle may start to charge the smart band. In a subsequent charging process, the smart band continues to transmit the charging parameter of the second battery to the charging cradle in a form of a pulse signal, so that the charging cradle adjusts a charging voltage and a charging current that are output to the smart band.

In addition, in a process in which the charging apparatus 601 charges the electronic device 602, the second controller 6021 can adjust a state of the fourth switching transistor Q4 to adjust a charging voltage and a charging current for the second battery 6024, so as to improve charging efficiency of the second battery 6024. Similarly, an impedance of the second switch module S3 can also be adjusted. When it is obtained, based on a voltage of the second battery 6024, that a corresponding charging phase is a constant-current charging phase or a constant-voltage charging phase, the impedance of the second switch module S3 is controlled to be the smallest.

In addition, the charging path may further include a switched-capacitor converter, so that a voltage can be adjusted.

FIG. 28 is a schematic diagram of another charging system according to an embodiment of this application.

Compared with the schematic diagram of the charging system shown in FIG. 27A, in the electronic device 602 of the charging system, a switched-capacitor converter is used to replace a fourth switching transistor.

A first end of the switched-capacitor converter 807 is configured to connect to the receiving terminal 6023, and a second end of the switched-capacitor converter is configured to connect to a first end of the third switch module S2.

In an actual process in which the charging apparatus 601 charges the electronic device 602, the switched-capacitor converter 807 may boost a voltage input to the switched-capacitor converter 807 and then output a boosted voltage, so that a voltage can be adjusted to charge the second battery 6024.

The foregoing describes a working principle of the charging system when no first controller is disposed in the charging apparatus. The following describes a communication process between the charging apparatus and a wearable apparatus.

When the charging apparatus and the electronic device need to communicate with each other, a second state machine in the electronic device controls the modulation module 806 to generate a pulse signal, and transmits information to the charging apparatus by using a feature character string corresponding to the pulse signal.

FIG. 29 is a waveform diagram of a pulse signal according to an embodiment of this application.

As shown in the figure, Bit 0 indicates a first bit of the feature character string, Bit 1 indicates a second bit of the feature character string, and Bit n indicates an (n-1)^{th} bit of the feature character string.

A quantity of bits of the feature character string is not limited in this application, and there may be six bits, or may be more bits, for example, sixteen bits. For ease of description, the following uses an example in which the feature character string contains 16 bits for description.

A specific form of the feature character string is not limited in this application. A person skilled in the art may select a specific form of the feature character string based on an actual requirement. The following uses FIG. 30 as an example for description.

FIG. 30 is a schematic diagram of a quantity of bits in a feature character string according to an embodiment of this application.

Bit 0 and Bit 1 indicate status bits. For example, when Bit 0 = " 1" and Bit 1 = " 1", an output voltage is indicated; and when Bit 0 = "0" and Bit 1 = "0", the output is indicated to be disabled.

Bit 2 to Bit 6 indicate a charging current. For example, when Bit 2 to Bit 6 = "11111", a maximum charging current is indicated; and when Bit 2 to Bit 6 = "00000", a minimum charging current is indicated.

Bit 7 to Bit 11 indicate a charging voltage. For example, when Bit 7 to Bit 11 = "11111", a maximum charging voltage is indicated; and when Bit 7 to Bit 11 = "00000", a minimum charging voltage is indicated.

Bit 12 to Bit 15 indicate anti-misread redundancy bits and parity bits.

For example, after an electronic device sends a pulse signal to a charging apparatus, a demodulation module inside the charging apparatus demodulates the pulse signal and generates a demodulation result. The demodulation result includes a feature character string corresponding to the pulse signal. The demodulation module sends the demodulation result to a first state machine, and the first state machine obtains, based on the demodulation result, the feature character string corresponding to the pulse signal.

When the feature character string corresponding to the pulse signal is Bit 0 to Bit 15 = "11111111111101010", it can be learned from FIG. 30 that the charging apparatus needs to output the maximum charging voltage and the maximum charging current to the electronic device, to charge a second battery of the electronic device.

When a second controller inside the electronic device detects that power of the second battery is in a full-power state, a second state machine controls a modulation module to generate a pulse signal, so as to notify the charging apparatus to disable voltage output and that the electronic device is fully charged.

Therefore, according to the charging system provided in this embodiment of this application, communication between the charging apparatus and the electronic device does not depend on system communication, so that there is no need to dispose a first controller inside the charging apparatus. In this case, a size of the charging apparatus is reduced. When no first controller is disposed inside the charging apparatus, power consumption of a first battery inside the charging apparatus can be reduced, so that an endurance capability of the electronic device is improved.

The foregoing embodiments describe a charging apparatus, an electronic device, and a charging system including the charging apparatus and the electronic device. The following describes a charging method.

### Method Embodiment 1

An embodiment of this application provides a charging method, and the charging method is applied to a charging apparatus.

For the charging apparatus, refer to the description in the foregoing embodiment. The charging apparatus includes a first battery, a first DCDC charger, a second DCDC charger, and a charging terminal. The first DCDC charger is configured to charge the first battery after converting direct current power transmitted by an adapter, and is further configured to supply power to the second DCDC charger. An input end of the second DCDC charger is configured to receive a direct current voltage output by the first DCDC charger, an output end of the second DCDC charger is connected to the charging terminal, and the charging terminal is configured to connect to a receiving terminal of the electronic device.

The charging method includes the following steps: Receive a charging parameter sent by the electronic device, where the charging parameter is obtained based on voltage information of the second battery of the electronic device.

Obtain a corresponding charging voltage and a corresponding charging current based on the charging parameter.

Detect an output voltage and an output current of the charging terminal.

Compare the output voltage with the charging voltage, and control, based on a voltage comparison result, the output voltage of the charging terminal to be consistent with the charging voltage; compare the output current with the charging current, and control, based on a current comparison result, the output current to be consistent with the charging current.

Electronic device.

According to the charging apparatus provided in this embodiment of this application, the charging apparatus is improved internally, so that the second DCDC charger in the charging apparatus can directly charge the electronic device, and directly provide the charging voltage and the charging current that are required by the battery of the electronic device. Further, the second DCDC charger directly charges the second battery of the electronic device after converting electric energy based on the charging parameter of the second battery, so that power consumption generated in the electronic device is reduced and charging efficiency of the second battery is improved.

### Method Embodiment 2

An embodiment of this application provides another charging method, and the charging method is applied to an electronic device.

For the electronic device, refer to the description in the foregoing embodiment. The electronic device includes a second battery, a second controller, a charging path, and a receiving terminal. The receiving terminal is configured to connect to a charging terminal of a charging apparatus, and the receiving terminal is configured to receive a charging voltage and a charging current that are required by the second battery and that are sent by the charging terminal. Both the charging voltage and the charging current that are required by the second battery are related to a voltage of the second battery. A first end of the charging path is connected to the receiving terminal, and a second end of the charging path is connected to the second battery.

The charging method includes the following steps:
Receive an output voltage and an output current of the charging terminal, where the output voltage is consistent with a charging voltage of the second battery, the output current is consistent with a charging current of the second battery, and both the output voltage and the output current are obtained by the charging apparatus based on a charging parameter sent by the electronic device.

When it is determined, based on a voltage of the second battery, that a charging phase is a constant-current charging phase or a constant-voltage charging phase, control the charging path to work in a bypass state to charge the second battery.

The electronic device provided in this embodiment of this application may communicate with the charging apparatus, to transmit voltage information of the second battery to the charging apparatus, or transmit the charging parameter of the second battery to the charging apparatus, so that the charging apparatus directly outputs the charging voltage and the charging current that are required by the second battery. This can reduce power consumption generated in the electronic device, and further improve charging efficiency of the second battery.

It should be understood that in this application, " at least one (item)" refers to one or more and " a plurality of" refers to two or more. Therefore, any simple amendment, equivalent variation, and modification made on the above embodiments according to the technical essence of this application without departing from the content of the technical solutions of this application shall fall within the protection scope of the technical solutions of this application.

## Claims

1. A charging apparatus, configured to charge an electronic device, comprising: a first DCDC charger, a second DCDC charger, a first battery, and a charging terminal, wherein
the first DCDC charger is configured to charge the first battery after converting direct current power transmitted by an adapter, and is further configured to supply power to the second DCDC charger;
an input end of the second DCDC charger is configured to receive a direct current voltage output by the first DCDC charger, an output end of the second DCDC charger is connected to the charging terminal, and the charging terminal is configured to connect to a receiving terminal of the electronic device; and
the second DCDC charger is configured to: receive a charging parameter sent by the electronic device, wherein the charging parameter is obtained based on voltage information of a second battery of the electronic device; obtain a corresponding charging voltage and a corresponding charging current based on the charging parameter, and control the charging terminal to output the charging voltage; and control the charging terminal to output the charging current.

2. The charging apparatus according to claim 1, further comprising a first controller, wherein
the first controller is configured to: receive the charging parameter sent by the electronic device, and send the charging parameter to the second DCDC charger, wherein the charging parameter carries the charging voltage and the charging current that correspond to the second battery.

3. The charging apparatus according to claim 1, further comprising a first controller, wherein
the first controller is configured to: receive the voltage information that is of the second battery and that is sent by the electronic device; obtain the corresponding charging parameter based on the voltage information of the second battery, and send the charging parameter to the second DCDC charger, wherein the charging parameter carries the charging voltage and the charging current that correspond to the second battery.

4. The charging apparatus according to claim 2 or 3, wherein the second DCDC charger comprises: a first state machine; and
the first state machine is configured to: receive a handshake signal sent by the electronic device, determine that the electronic device is in position, and notify the first controller that the electronic device is in position.

5. The charging apparatus according to claim 2 or 3, wherein the second DCDC charger comprises: a first state machine and a demodulation module;
the demodulation module is configured to: receive, from the charging terminal, a handshake signal sent by the electronic device, demodulate the handshake signal, and send a demodulation result to the first state machine; and
the first state machine is configured to: when determining, based on the demodulation result, that a handshake succeeds, notify the first controller that the handshake succeeds, so that the first controller receives the voltage information or the charging parameter that is of the second battery and that is sent by the electronic device.

6. The charging apparatus according to claim 4 or 5, wherein that the first state machine is configured to notify the first controller that the handshake succeeds is specifically as follows:
when confirming that the handshake succeeds, the first state machine is configured to send an interrupt signal to the first controller, wherein the interrupt signal is used to notify the first controller that the handshake succeeds.

7. The charging apparatus according to any one of claims 4 to 6, wherein the second DCDC charger comprises:
a first switch module and a DCDC conversion circuit;
an input end of the DCDC conversion circuit is the input end of the second DCDC charger;
an output end of the DCDC conversion circuit is connected to a first end of the first switch module, a second end of the first switch module is the output end of the second DCDC charger, and a third end of the first switch module is connected to a first communication interface of the first controller; and
the first state machine is configured to: when the first controller communicates with the electronic device, control the first switch module to connect the charging terminal to the first communication interface; and when the second DCDC charger charges the electronic device, control the first switch module to connect the charging terminal to the output end of the DCDC conversion circuit, and control, based on the charging voltage and the charging current, the DCDC conversion circuit to perform electric energy conversion.

8. The charging apparatus according to claim 7, wherein the first state machine is further configured to: before the first switch module connects the charging terminal to the first communication interface, disable output of the DCDC conversion circuit; and when a voltage of the charging terminal is lower than a first preset threshold, control the first switch module to connect the charging terminal to the first communication interface.

9. The charging apparatus according to claim 2 or 3, further comprising a carrier communication module, wherein
the first controller is configured to: communicate with the electronic device by using the carrier communication module, and receive the voltage information or the charging parameter of the second battery.

10. The charging apparatus according to claim 1, wherein the second DCDC charger comprises: a first state machine and a demodulation module;
the demodulation module is configured to: receive, from the charging terminal, a handshake signal sent by the electronic device, demodulate the handshake signal, and send a demodulation result to the first state machine; and
the first state machine is configured to: when determining, based on the demodulation result, that a handshake succeeds, receive the voltage information or the charging parameter that is of the second battery and that is sent by the electronic device; and when receiving the voltage information of the second battery, the first state machine is further configured to obtain the charging parameter based on the voltage information of the second battery.

11. The charging apparatus according to claim 10 or 5, wherein the demodulation module is specifically configured to: demodulate a current signal at a second end of the second DCDC charger, and send a demodulation result of the current signal to the first state machine; and
the first state machine is configured to: compare the demodulation result of the current signal with a preset pulse signal, and confirm, based on a comparison result, whether the handshake succeeds.

12. The charging apparatus according to claim 10 or 11, further comprising a DCDC conversion circuit, wherein
an input end of the DCDC conversion circuit is the input end of the second DCDC charger, and an output end of the DCDC conversion circuit is connected to the charging terminal;
the first state machine is configured to control, based on a voltage comparison result and a current comparison result, the DCDC conversion circuit to perform electric energy conversion; and
the DCDC conversion circuit is configured to adjust the output voltage and the output current based on the voltage comparison result and the current comparison result.

13. An electronic device, comprising a second battery, a second controller, a charging path, and a receiving terminal, wherein
the receiving terminal is configured to connect to a charging terminal of a charging apparatus, the receiving terminal is configured to receive a charging voltage and a charging current that are output by the charging terminal, the charging voltage is consistent with or has a preset multiple relationship with a charging voltage of the second battery, and the charging voltage and the charging current;
a first end of the charging path is connected to the receiving terminal, and a second end of the charging path is connected to the second battery; and
the second controller is configured to: obtain a corresponding charging parameter based on voltage information of the second battery, and send the charging parameter to the charging apparatus, so that the charging apparatus obtains the charging voltage and the charging current based on the charging parameter; and when determining that a charging phase is a constant-current charging phase or a constant-voltage charging phase, control the charging path to work in a bypass state to charge the second battery.

14. The electronic device according to claim 13, wherein the second controller is further configured to send the voltage information of the second battery to the charging apparatus, so that the charging apparatus obtains the corresponding charging parameter based on the voltage information of the second battery.

15. The electronic device according to claim 13 or 14, wherein the charging path comprises a second switch module;
a first end of the second switch module is used as the first end of the charging path, and a second end of the second switch module is used as the second end of the charging path;
an impedance of the second switch module is adjustable; and
the second controller is configured to: obtain a corresponding charging phase based on the voltage information of the second battery; and when the charging phase is the constant-current charging phase or the constant-voltage charging phase, control the impedance of the second switch module to be the smallest; and when the charging phase is a trickle charging phase, control the impedance of the second switch module to be the largest.

16. The electronic device according to claim 15, wherein the second switch module comprises two MOS transistors connected in series: a first MOS transistor and a second MOS transistor, and an anti-parallel diode of the first MOS transistor and an anti-parallel diode of the second MOS transistor have opposite directions.

17. The electronic device according to claim 16, wherein the second switch module further comprises a third MOS transistor;
the third MOS transistor is connected in parallel to two ends of the two MOS transistors connected in series; and
when the charging phase is the constant-current charging phase, the second controller controls the third MOS transistor to be turned on.

18. The electronic device according to any one of claims 15 to 17, wherein the charging path further comprises a switched-capacitor converter;
the switched-capacitor converter and the second switch module are connected in series; and
the switched-capacitor converter is configured to boost a voltage input to the switched-capacitor converter and then output a boosted voltage.

19. The electronic device according to claim 13 or 14, wherein the charging path comprises: a switched-capacitor converter, a safety switch, and a second switch module;
a first end of the switched-capacitor converter is connected to the receiving terminal, a first end of the safety switch is connected to the first end of the switched-capacitor converter, the first end of the switched-capacitor converter is connected to the second battery, a second end of the safety switch is connected to a first end of the second switch module, and a second end of the second switch module is connected to the second battery;
an impedance of the second switch module is adjustable; and
the second controller is configured to: obtain a corresponding charging phase based on the voltage information of the second battery; and when the charging phase is the constant-current charging phase or the constant-voltage charging phase, control the safety switch to be turned off and control the switched-capacitor converter to work in the bypass state; and in another charging phase, control the safety switch to be turned on.

20. The electronic device according to claim 15 or 19, further comprising a second state machine and a modulation module, wherein
the second state machine is configured to: control the modulation module to modulate a handshake signal and send a modulated handshake signal to the receiving terminal, so that the charging apparatus receives the handshake signal to confirm whether a handshake succeeds; and when it is confirmed that the handshake succeeds, notify the second controller to communicate with the charging apparatus, so that the second controller sends the voltage information or the charging parameter of the second battery to the charging apparatus.

21. The electronic device according to claim 20, further comprising a third switch module, wherein
a first end of the third switch module is connected to the receiving terminal, a second end of the third switch module is connected to the first end of the charging path, and a third end of the third switch module is connected to a second communication interface of the second controller; and
the second state machine is configured to: when the second controller communicates with the charging apparatus, control the third switch module to connect the receiving terminal to the second communication interface of the second controller; and when the charging apparatus charges the second battery, control the third switch module to connect the receiving terminal to the first end of the charging path.

22. The electronic device according to claim 15 or 19, wherein that the second state machine confirms that the handshake succeeds is specifically as follows:
after the handshake signal is sent, when a voltage of the receiving terminal is lower than a second preset threshold, confirming that the handshake succeeds.

23. The electronic device according to any one of claims 13 to 19, further comprising a carrier communication module, wherein
the second controller is configured to: communicate with the charging apparatus by using the carrier communication module, and send the voltage information or the charging parameter of the second battery.

24. The electronic device according to any one of claims 13 to 23, wherein the electronic device is any one of the following:
a Bluetooth headset, a band, and a watch.

25. A charging system of an electronic device, comprising the charging apparatus according to any one of claims 1 to 12 and the electronic device according to any one of claims 13 to 24, wherein
the charging apparatus is configured to charge the electronic device.

26. The charging system according to claim 25, wherein there are two charging terminals of the charging apparatus, and there are two receiving terminals of the electronic device.

27. A charging method using a charging apparatus, wherein the charging apparatus comprises: a first DCDC charger, a first battery, a second DCDC charger, and a charging terminal; , wherein the first DCDC charger is configured to charge the first battery after converting direct current power transmitted by an adapter, and is further configured to supply power to the second DCDC charger; an input end of the second DCDC charger is configured to receive a direct current voltage output by the first DCDC charger, an output end of the second DCDC charger is connected to the charging terminal, and the charging terminal is configured to connect to a receiving terminal of the electronic device; and
the method comprises:
receiving a charging parameter sent by the electronic device, wherein the charging parameter is obtained based on voltage information of a second battery of the electronic device;
obtaining a corresponding charging voltage and a corresponding charging current based on the charging parameter;
detecting an output voltage and an output current of the charging terminal; and
controlling the charging terminal to output the charging voltage; and controlling the charging terminal to output the charging current.

28. A charging method, applied to an electronic device, wherein the electronic device comprises a second battery, a second controller, a charging path, and a receiving terminal, ; wherein the receiving terminal is configured to connect to a charging terminal of a charging apparatus, a first end of the charging path is connected to the receiving terminal, and a second end of the charging path is connected to the second battery; and
the method comprises:
receiving an output voltage and an output current of the charging terminal, wherein the output voltage is consistent with or has a preset multiple relationship with a charging voltage of the second battery, the output current is consistent with a charging current of the second battery, and both the output voltage and the output current are obtained by the charging apparatus based on a charging parameter sent by the electronic device; and
when it is determined, based on a voltage of the second battery, that a charging phase is a constant-current charging phase or a constant-voltage charging phase, controlling the charging path to work in a bypass state to charge the second battery.
